(19) Europäisches Patentamt
European Patent Office
Office européen des brevets

(11) EP 2 139 703 B1

(12) **FASCICULE DE BREVET EUROPEEN**

(45) Date de publication et mention de la délivrance du brevet:
**22.08.2018 Bulletin 2018/34**

(21) Numéro de dépôt: **08748916.7**

(22) Date de dépôt: **15.04.2008**

(51) Int Cl.:
***B60C 1/00*** *(2006.01)* ***C08C 19/25*** *(2006.01)*
***C08L 19/00*** *(2006.01)*

(86) Numéro de dépôt international:
**PCT/EP2008/002977**

(87) Numéro de publication internationale:
**WO 2008/141702 (27.11.2008 Gazette 2008/48)**

(54) **ELASTOMERE DIENIQUE COUPLE MONOMODAL POSSEDANT UNE FONCTION SILANOL EN MILIEU DE CHAINE, SON PROCEDE D'OBTENTION ET COMPOSITION DE CAOUTCHOUC LE CONTENANT**

MONOMODALES SILANOLMITTELKETTIGES GEKOPPELTES ELASTOMER, VERFAHREN ZUR DESSEN HERSTELLUNG UND KAUTSCHUKZUSAMMENSETZUNG DAMIT.

COUPLED MONOMODAL DIENIC ELASTOMER HAVING A SILANOL IN CHAIN MEDIUM FUNCTION, THE METHOD OF OBTAINING SAME AND COMPOSITION OF RUBBER CONTAINING IT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **18.04.2007 FR 0702818**

(43) Date de publication de la demande:
**06.01.2010 Bulletin 2010/01**

(73) Titulaire: **Compagnie Générale des Etablissements Michelin**
**63000 Clermont-Ferrand (FR)**

(72) Inventeurs:
- **MARECHAL, Jean-Marc**
  **63400 Chamalières (FR)**
- **CHABOCHE, Philippe**
  **63000 Clermont-Ferrand (FR)**
- **FAVROT, Jean-Michel**
  **63800 Cournon d'Auvergne (FR)**

(74) Mandataire: **Le Cam, Stéphane Georges Elie et al**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A- 1 400 560** **FR-A- 2 242 407**
**US-A- 5 554 696**

- **ZELINSKI R P ET AL: "Synthesis of trichain and tetrachain radial polybutadienes" JOURNAL OF POLYMER SCIENCE. PART A, POLYMER CHEMISTRY, WILEY, NEW YORK, NY, US, vol. 3, no. 1, janvier 1965 (1965-01), pages 93-103, XP008086967 ISSN: 0887-624X**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention est relative à un élastomère diénique monomodal couplé possédant une fonction silanol en milieu de chaîne, à un procédé de préparation de cet élastomère, ainsi qu'à une composition de caoutchouc utilisable notamment pour la fabrication d'enveloppes de pneumatiques, possédant des propriétés hystérétiques et physiques améliorées à l'état vulcanisé ainsi qu'une mise en oeuvre à l'état cru améliorée, comprenant un polymère diénique monomodal possédant une fonction silanol en milieu de chaîne et une charge inorganique renforçante.

Depuis que les économies de carburant et la nécessité de protéger l'environnement sont devenues une priorité, il est souhaitable de produire des polymères possédant de bonnes propriétés mécaniques, une hystérèse aussi faible que possible, et de pouvoir les mettre en oeuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation. La très grande majorité de ces solutions s'est essentiellement concentrée sur l'utilisation de polymères modifiés avec du noir de carbone comme charge renforçante dans le but d'obtenir une bonne interaction entre le polymère modifié et le noir de carbone, l'usage de charge blanche, notamment la silice, s'étant révélé inapproprié en raison du faible niveau de certaines propriétés de telles compositions et, par voie de conséquence, de certaines propriétés pneumatiques mettant en oeuvre ces compositions telles que la faible résistance à l'usure. A titre d'exemples illustratifs de cet art antérieur, nous pouvons citer le brevet US-B-4 677 165 qui décrit la réaction de polymères vivants fonctionnalisés avec des dérivés de la benzophénone pour obtenir des propriétés améliorées dans les compositions contenant du noir de carbone. Dans le même but, le brevet US-B-4 647 625 décrit la fonctionnalisation d'élastomère par réaction de polymères vivants avec la N-méthylpyrrolidine. Les demandes de brevets EP-A-0 590 491 et EP-A-0 593 049 décrivent des polymères portant des fonctions amines permettant une meilleure interaction entre le polymère et le noir de carbone.

Quelques solutions ont également été proposées concernant l'utilisation de la silice à titre de charge renforçante dans des compositions destinées à constituer des bandes de roulement de pneumatiques. Ainsi les demandes de brevets EP-A-0 299 074 et EP-A-0 447 066 décrivent des polymères fonctionnalisés comportant des fonctions alcoxysilanes. Ces polymères fonctionnalisés ont été décrits dans l'art antérieur comme efficaces pour réduire l'hystérèse et améliorer la tenue à l'abrasion, cependant leurs propriétés restent insuffisantes pour permettre la mise en oeuvre de ces polymères dans des compositions destinées à constituer des bandes de roulement de pneumatiques. Par ailleurs, la formulation de ces polymères pose des problèmes d'évolution des macrostructures lors de l'élimination du solvant de polymérisation, ce qui conduit à une sévère dégradation des propriétés potentiellement intéressantes. En outre, cette évolution est très peu contrôlable.

Plus récemment, la demande de brevet EP-A-0 877 047 a décrit une composition de caoutchouc utilisant à titre de charge renforçante du noir de carbone ayant de la silice fixée sur sa surface, à base d'un polymère diénique fonctionnalisé en extrémité de chaîne par une fonction silanol ou un bloc polysiloxane ayant au moins une extrémité silanol ou un polymère diénique fonctionnalisé le long de sa chaîne par des fonctions silanols. Cette composition présente des propriétés d'hystérèse améliorées par rapport à des compositions renfermant du noir de carbone à titre de charge renforçante. La mise en oeuvre à cru, c'est-à-dire à l'état non vulcanisé, de ladite composition est délicate en raison de la viscosité Mooney élevée du mélange cru.

Plusieurs voies de synthèse des élastomères fonctionnalisés par une fonction silanol sont proposées dans ce document, en particulier est décrite la synthèse par réaction d'une chaîne polymère vivante avec un polysiloxane cyclique et la réaction d'un dérivé dihalogénosilane de type $R_1R_2SiX_n$ sur une chaîne polymère vivante avec $R_1$ et $R_2$ identiques ou différents, représentant un groupe alcoyle ayant de 1 à 8 atomes de carbone, X représentant un atome d'halogène et de préférence le chlore ou le brome, n étant le nombre entier 2. Cette réaction conduit à la formation d'un SBR possédant une fonction Si-X en extrémité de chaîne qui après hydrolyse, se transforme en liaison SiOH, comme décrit dans le manuel « Chemistry and Technology of Silicones », Academic Press, New York, N. Y. (1968) page 95. Il est également mentionné dans ce manuel que cette fonction Si-X est évolutive et peut conduire à une réaction de condensation. Il est toutefois connu du document de brevet EP 0 778 311 A1 que l'opération classique de récupération par stripping à la vapeur d'eau du solvant de polymérisation lors de la récupération du polymère fonctionnalisé ne permet pas l'évolution de cette fonction Si-X.

L'article du Journal of Polymer Science : Part A vol. 3, pages 93-103 (1965) décrit la réaction d'élastomères diéniques préparés sans agent polaire à l'aide de dérivés halogénosilane de type $R_xSiX_{4-x}$ avec x = 0-3. La formation de polybutadiène fonctionnel possédant une fonction Si-Cl en milieu de chaîne issu de la réaction de 2 chaînes de polymère vivant sur une molécule de $CH_3SiCl_3$ est évoquée. Pour l'homme de l'art, cette réaction suivie d'une hydrolyse

conduit à la formation d'un polybutadiène possédant une fonction SiOH en milieu de chaîne. La teneur en liaisons 1,2 du polybutadiène fonctionnel n'est que de 8 %.

Les demandes de brevets EP 1 398 347 A1, EP 1 400 559 A1, EP 1 400 560 A1 divulguent l'utilisation de compositions de caoutchouc utilisables pour la fabrication d'enveloppes de pneumatique comprenant un SBR composite polymodal et de préférence bimodal possédant au moins une fonction SiOH ou SiOR en milieu de chaîne, commercialisé par la société Japan Synthetic Rubber Corporation sous la marque T596. Ce SBR composite polymodal comprend 35 à 55 % en poids d'un SBR1 non fonctionnel de masse moléculaire en nombre Mn allant de 200.000 à 300.000 g/mol et de 65 à 35 % en poids d'un SBR2 ayant une masse moléculaire en nombre Mn allant de 400.000 à 500.000 g/mol, une teneur en styrène allant de 25 à 35 % et une teneur en motifs 1,2 pour la partie butadiénique allant de 50 à 70 % (une température de transition vitreuse Tg allant de -15 °C à - 30 °C) et de 0 à 10 % en poids d'un SBR3 ayant une masse moléculaire en nombre supérieure à 550.000 g/mol.

Les élastomères utilisables dans une composition de caoutchouc réticulable en vue d'une utilisation en pneumatique sont principalement des copolymères de butadiène et de styrène (SBR) ou des polybutadiènes (BR). Leur synthèse requiert l'emploi d'un agent polaire lors de l'étape de polymérisation afin de permettre le réglage de la température de transition vitreuse. Plusieurs types d'agents polaires peuvent être utilisés parmi lesquels des agents polaires non chélatants de type THF et des agents polaires chélatants possédant sur au moins deux atomes au moins un doublet non liant, comme par exemple de type tétrahydrofurfuryl éthyle éther ou tétraméthyl éthylènediamine.

La présente invention concerne, à titre de produit industriel nouveau, un élastomère diénique couplé possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN$^1$H et exprimé en mmol/kg, $N_p$ représente le nombre de mmoles de polymère avant couplage par kilogramme de polymère, allant de 0,36 à 0,60 (soit un taux de fonction Si allant de 36 % à 60 %), un taux de fonction silanol (SiOH) en milieu de chaîne T1, qui est le rapport correspondant au nombre de moles de fonctions SiOH sur le nombre de moles de Silicium (Si), déterminé par résonance magnétique nucléaire RMN2D$^1$H-$^{29}$Si allant de 80 à 100 % et une distribution monomodale des masses moléculaires en nombre des chaînes de polymère couplées.

Le nombre $N_p$ est obtenu par le rapport $10^6$ sur masse moléculaire en nombre Mn déterminée par chromatographie d'exclusion par taille (SEC3D).

La présente invention concerne également un procédé d'obtention d'un élastomère diénique monomodal couplé possédant une fonction silanol en milieu de chaîne consistant, dans une première étape, à faire réagir le(s) monomère(s), en présence ou non d'un solvant hydrocarboné inerte, en présence d'un agent polaire chélatant possédant au moins sur deux atomes au moins un doublet non liant, avec un initiateur de polymérisation, pour former un polymère diénique vivant et à faire réagir, dans une seconde étape, comme connu en soi, ledit polymère vivant avec un agent de couplage de chaînes polymères pour obtenir, après hydrolyse, le polymère diénique monomodal couplé possédant une fonction silanol en milieu de chaîne.

Le terme élastomère ou polymère monomodal signifie, en relation avec la distribution des masses moléculaires, une distribution des masses moléculaires en nombre déterminée par la technique SEC (chromatographie d'exclusion par taille) correspondant à un unique pic lors de la décomposition du chromatogramme SEC.

La demanderesse a en effet découvert de manière surprenante que la nature de l'agent polaire employé lors de l'étape de polymérisation a une influence sur la sélectivité de la réaction de couplage entre les chaînes polymères vivantes et l'agent de couplage de chaînes polymères. Lorsqu'un agent polaire non chélatant est utilisé, on observe la formation de diverses espèces dont notamment des étoiles à trois branches tandis que, lorsque l'on utilise un agent polaire chélatant, on constate d'une part que le taux T est élevé, c'est-à-dire allant de 0,36 à 0,60, ce qui démontre que la majorité des chaînes polymères comportant un atome de Si sont couplées, sachant que l'optimum de la réaction de couplage consiste à avoir deux chaînes polymères couplées à un atome de Si, ce qui correspond à un taux de fonction Si de 0,5, et d'autre part qu'on forme très majoritairement (taux de fonctionnalisation T1 > 80 %, c'est-à-dire allant de 80 à 100 %), des élastomères couplés possédant une fonction silanol en milieu de chaîne en raison d'une sélectivité très élevée dudit agent polaire chélatant et que la distribution des masses moléculaires en nombre des chaînes de polymère couplées est monomodale.

L'agent polaire chélatant est de préférence mis en présence du ou des monomère(s) diénique(s) et du solvant, lorsque la polymérisation est effectuée en solution, avant addition de l'initiateur de polymérisation.

A titre d'agents polaires chélatants utilisables dans le procédé conforme à l'invention conviennent notamment les agents comprenant au moins une fonction amine tertiaire ou au moins une fonction éther et préférentiellement des agents de type tétrahydrofurfuryle éthyle éther ou tétraméthyle éthylènediamine.

A titre de diènes conjugués utilisables dans le procédé conforme à l'invention conviennent notamment le butadiène-1,3, le 2-méthyl-1,3-butadiène, les 2,3-di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc.

A titre de composés vinylaromatiques conviennent notamment le styrène, l'ortho-, méta, para-méthylstyrène,

le mélange commercial "vinyltoluène", le para-tertiobutylstyrène, les méthoxystyrènes, le vinylmésitylène, le divinylbenzène, le vinylnaphtalène, etc.

Les copolymères peuvent contenir entre 99 % et 20 % en poids d'unités diéniques et de 1 % à 80 % en poids d'unités vinylaromatiques.

Les polymères diéniques monomodaux couplés portant en milieu de chaîne une fonction silanol peuvent avoir toute microstructure qui est fonction des conditions de polymérisation utilisées. Les polymères peuvent être à blocs, statistiques, séquencés, microséquencés, etc. et être préparés en dispersion ou en solution. Lorsqu'il s'agit d'une polymérisation anionique, la microstructure de ces polymères peut être déterminée par la présence ou non d'un agent modifiant et/ou randomisant et les quantités d'agent modifiant et/ou randomisant employées.

Par polymères diéniques monomodaux couplés susceptibles d'être préparés selon le procédé conforme à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatiques ayant de 8 à 20 atomes de carbone.

De manière particulièrement préférentielle, le polymère diénique monomodal couplé portant en milieu de chaîne une fonction silanol est choisi dans le groupe des élastomères diéniques « fortement insaturés » préparés en solution constitué par les polybutadiènes (BR), les polyisoprènes de synthèse (IR), les copolymères butadiène-styrène (SBR), les copolymères butadiène-isoprène (BIR), les copolymères isoprène-styrène (SIR), les copolymères butadiène-styrène-isoprène (SBIR).

De manière encore plus préférentielle, ledit élastomère appartient à la famille constituée par les polybutadiènes, les copolymères butadiène-styrène et les copolymères butadiène-styrène-isoprène préparés en solution et le polyisoprène.

Avantageusement, ledit élastomère est un copolymère butadiène-styrène préparé en solution.

Avantageusement, ledit élastomère est un copolymère de butadiène-styrène préparé en solution ayant une teneur en styrène comprise entre 20 % et 45 % en poids, une teneur en liaisons vinyliques de la partie butadiène comprise entre 15 % et 65 %, une teneur en liaisons trans-1,4 comprise entre 15 % et 75 % et une Tg comprise entre - 5 et - 65 °C, et préférentiellement entre - 20 et - 55 °C.

A titre préférentiel conviennent les polybutadiènes et en particulier ceux ayant une teneur en unités-1,2 comprise entre 15 % et 80 %, les polyisoprènes, les copolymères de butadiène-styrène et en particulier ceux ayant une teneur en styrène comprise entre 4 et 50 % en poids et plus particulièrement entre 20 % et 40 % en poids, une teneur en liaisons -1,2 de la partie butadiénique comprise entre 15 % et 65 %, une teneur en liaisons trans-1,4 comprise entre 10 % et 80 %, les copolymères de butadiène-isoprène et notamment ceux ayant une teneur en isoprène comprise entre 5 et 90 % en poids et une température de transition vitreuse (Tg) de - 40 °C à - 80 °C, les copolymères isoprène-styrène et notamment ceux ayant une teneur en styrène comprise entre 5 et 50 % en poids et une Tg comprise entre - 5 °C et - 50 °C. Dans le cas de copolymères de butadiène-styrène-isoprène conviennent ceux ayant une teneur en styrène comprise entre 5 et 50 % en poids et plus particulièrement comprise entre 10 % et 40 %, en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 15 % et 85 %, une teneur en unités trans-1,4 de la partie butadiénique comprise entre 6 % et 80 %, une teneur en unités-1,2 plus 3,4 de la partie isoprénique comprise entre 15 % et 70 % et une teneur en unités trans-1,4 de la partie isoprénique comprise entre 10 % et 50 % et plus généralement tout copolymère butadiène-styrène-isoprène ayant une Tg comprise entre - 5 °C et - 70 °C.

En tant qu'initiateur de polymérisation, on peut utiliser tout initiateur anionique monofonctionnel connu. Toutefois un initiateur contenant un métal alcalin tel que le lithium est utilisé à titre préférentiel. Comme initiateurs organolithiens conviennent notamment ceux comportant une liaison carbone-lithium. Des composés représentatifs sont les organolithiens aliphatiques tels que l'éthyllithium, le n-butyllithium (n-BuLi), l'isobutyllithium, etc., les amidures de lithium qui sont obtenus à partir d'une amine secondaire cyclique, telle que la pyrrolidine et l'hexaméthylèneimine et qui sont solubles dans un solvant hydrocarboné sans utilisation d'un agent de solvatation sont hautement préférés.

La polymérisation est, comme connu en soi, de préférence effectuée en présence d'un solvant hydrocarboné inerte qui peut être par exemple un hydrocarbure aliphatique ou alicyclique comme le pentane, l'hexane, l'heptane, l'isooctane, le cyclohexane, le méthylcyclohexane ou un hydrocarbure aromatique comme le benzène, le toluène, le xylène.

La polymérisation peut être effectuée en continu ou en discontinu. On effectue généralement la polymérisation à une température comprise entre 20 °C et 150 °C et de préférence voisine de 30 °C à 110 °C.

La réaction de couplage du polymère diénique vivant, obtenu à l'issue de la première étape, peut se dérouler à une température comprise entre - 20 et 100 °C, par addition d'un agent de couplage non polymérisable sur les chaînes polymères vivantes ou inversement. Le mélangeage peut être réalisé par tout moyen approprié notamment à l'aide de tout mélangeur disposant d'une agitation de type statique et/ou tout mélangeur dynamique de type parfaitement agité connu par l'homme de l'art. Le temps de réaction entre le polymère diénique vivant et l'agent de couplage peut être compris entre 10 secondes et 2 heures.

Conviennent à titre d'agents de couplage tous les composés répondant à la formule $RSiX_n$ dans laquelle R représente un groupe alcoyle primaire ou secondaire, cycloalcoyle, aryle ayant de 1 à 20 atomes de carbone, et X représente un atome d'halogène et de préférence le chlore ou le brome, n est le nombre entier 3. Le rapport pour le couplage entre l'agent de couplage $RSiX_n$ et le métal de l'initiateur des chaînes polymères vivantes est compris entre 0,4 et 1,0 et préférentiellement entre 0,5 et 0,7.

Le solvant utilisé pour la réaction de couplage des chaînes polymères, de préférence, est le même que le solvant hydrocarboné inerte utilisé pour la polymérisation, et de préférence le cyclohexane ou tout autre solvant hydrocarboné aliphatique. Le rapport massique solvant/monomère(s) avant la réaction sera compris entre 1 et 15 et de préférence entre 4 et 7. Le procédé de polymérisation pourra être effectué selon un procédé en continu ou en discontinu.

Les polymères diéniques couplés qui possèdent en milieu de chaîne une fonction silanol et préparés selon le procédé conforme à l'invention possèdent une masse moléculaire moyenne en nombre Mn déterminée par la technique SEC conventionnelle comprise entre 100 000 g/mol et 350 000 g/mol et de préférence comprise entre 114 000 et 185 000 g/mol.

La viscosité Mooney (ML1+4 à 100 °C) sera comprise de préférence entre 20 et 150.

Les polymères diéniques couplés qui possèdent en milieu de chaîne une fonction silanol et préparés selon le procédé conforme à l'invention sont récupérés selon les méthodes classiques de récupération, notamment par séchage à chaud et/ou pression réduite ou par stripping.

L'invention a également pour but et pour objet une composition de caoutchouc réticulable ou réticulée à base d'au moins un ou plusieurs polymère(s) diénique(s) monomodal couplé(s) possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN'H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, et d'une charge inorganique renforçante qui présente des pertes hystérétiques réduites à l'état réticulé et une aptitude à la mise en oeuvre améliorée à l'état non réticulé et qui possède une aptitude particulière à être utilisée pour constituer des compositions de caoutchouc.

Ce but est atteint en ce que la demanderesse vient de découvrir d'une manière surprenante qu'une composition de caoutchouc réticulée, obtenue par l'association à une charge inorganique renforçante d'au moins un élastomère diénique monomodal couplé selon l'invention qui comporte une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN'H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, par exemple obtenu selon le procédé de préparation décrit ci-dessus, présente des pertes hystérétiques réduites aux petites et aux grandes déformations, analogues à celles présentées par des compositions connues à base de polymères comportant des groupes fonctionnels actifs en extrémité de chaîne, notamment une fonction silanol, et qui sont améliorées par rapport à celles des compositions chargées à la silice à base de polymères non fonctionnalisés, tout en possédant des propriétés de mise en oeuvre à l'état non réticulé qui sont améliorées par rapport à celles des compositions connues chargées à la silice et qui possèdent des polymères diéniques fonctionnels portant en extrémité de chaîne une fonction silanol, et qui sont comparables à celles de compositions chargées à la silice à base de polymères non fonctionnalisés.

Les caractéristiques de l'élastomère diénique monomodal couplé comportant une fonction silanol en milieu de chaîne, un taux de fonction (Si) global T allant de 0,36 à 0,60 et un taux de fonction silanol (SiOH) en milieu de chaîne T1 allant de 80 à 100 %, selon l'invention rendent celui-ci utilisable pour constituer une composition de caoutchouc avantageusement utilisable en tant que bande de roulement de pneumatique présentant notamment une résistance au roulement réduite pour pneu neuf ou rechapé ou en tant que mélange interne au pneumatique, par exemple pour la réalisation de sous-couches, pour le calandrage d'armatures de sommet ou de carcasses.

L'invention a également pour objet un pneumatique comportant une bande de roulement à base d'une composition de caoutchouc à base d'au moins un polymère diénique monomodal couplé selon l'invention possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN'H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, et une charge inorganique renforçante.

Selon une caractéristique préférentielle de l'invention, ladite composition est à base d'une matrice élastomère comprenant à titre majoritaire au moins un élastomère diénique monomodal couplé possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN$^1$H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, à titre encore plus préférentiel, cette matrice élastomère est exclusivement constituée dudit élastomère diénique monomodal couplé possédant une fonction silanol en milieu de chaîne.

Par l'expression composition « à base de », il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication de la composition, en particulier au cours de sa réticulation.

Bien entendu, les compositions selon l'invention peuvent contenir un seul élastomère diénique monomodal couplé possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN$^1$H et exprimé en mmol/kg, $N_p$ représente le nombre de moles de polymère avant couplage par kilogramme de polymère allant, de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, tel que celui précité ou un mélange de plusieurs desdits élastomères.

Le ou les élastomère(s) diénique(s) monomodal(aux) couplé(s) possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN'H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, selon l'invention peuvent être utilisés seuls dans la composition conforme à l'invention ou en coupage avec tout autre élastomère diénique fonctionnalisé ou non qui est conventionnellement utilisé dans les pneumatiques.

On notera que l'amélioration des propriétés de la composition selon l'invention sera d'autant plus élevée que la proportion du ou des élastomères conventionnels dans cette composition sera plus réduite.

Dans la présente demande, on entend par « charge inorganique renforçante », de manière connue, une charge inorganique ou minérale, quelles que soient sa couleur et son origine (naturelle ou de synthèse), encore appelée charge « blanche » ou parfois charge « claire » par opposition au noir de carbone (considéré comme une charge organique dans le cadre de la présente description), cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique. Une telle charge se caractérise généralement, de manière connue, par la présence de groupes hydroxyle (-OH) à sa surface, nécessitant en cela l'emploi d'un agent ou système de couplage destiné à assurer une liaison stable entre l'élastomère et la charge.

Préférentiellement, la charge inorganique renforçante est présente dans la composition de l'invention selon une quantité comprise entre 20 et 200 pce [pce : parties en poids pour cent parties d'élastomère(s)], plus préférentiellement entre 40 et 150 pce, l'optimum étant différent selon les applications visées. Egalement à titre préférentiel, ladite charge inorganique renforçante est présente dans la charge renforçante que comprend la composition de l'invention selon une fraction massique supérieure à 50 % et pouvant aller jusqu'à 100 %.

Avantageusement, ladite charge inorganique renforçante est, en totalité ou tout du moins majoritairement, de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, même si les silices précipitées hautement dispersibles sont préférées.

Dans le présent exposé, la surface spécifique BET est déterminée de manière connue, selon la méthode de Brunauer-Emmet-Teller décrite dans « The Journal of the American Chemical Society » Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer

la silice Perkasil KS 430 de la société Akzo, la silice BV 3380 de la société Degussa, les silices Zeosil 1165 MP, 1135 MP et 1115 MP de la société Rhodia, la silice Hi-Sil 2000 et Hi-Sil EZ 150G de la société PPG, les silices Zeopol 8715, 8755 ou 8745 de la Société Huber telles que décrites dans la demande WO 03/016387, des silices précipitées traitées telles que par exemple les silices « dopées » à l'aluminium décrites dans le document de brevet EP-A-735 088.

L'état physique sous lequel se présente la charge inorganique renforçante est indifférent, que ce soit sous forme de poudre, microperles, granulés, ou de billes.

Bien entendu, on entend également par charge inorganique renforçante des mélanges de différentes charges inorganiques renforçantes, en particulier de silice hautement dispersibles telles que décrites ci-dessus. A titre de charge inorganique renforçante, convient également l'alumine ($Al_2O_3$) hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm. Comme exemples non limitatifs de telles alumines renforçantes, on peut citer notamment les alumines « Baikalox A125 » ou « CR125 » (Société Baïkowski), « APA-100RDX » (Condéa), « Aluminoxid C » (Degussa) ou « AKP-G015 » (Sumitomo Chemicals).

On notera que la charge renforçante d'une composition de caoutchouc selon l'invention peut contenir en coupage (mélange), en plus de la ou des charges inorganiques renforçantes précitées, du noir de carbone à titre minoritaire (c'est-à-dire selon une fraction massique inférieure à 50 %) ou des charges inertes (non renforçantes). Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375. Comme charges inertes non renforçantes conviennent des particules d'argile, bentonite, talc, craie, kaolin.

Par exemple, les coupages noir/ silice ou les noirs partiellement ou intégralement recouverts de silice conviennent pour constituer la charge renforçante. Conviennent également des charges renforçantes comprenant les noirs de carbone recouverts au moins en partie d'une couche inorganique, par exemple de silice nécessitant quant à elle l'utilisation d'un agent de couplage pour établir la liaison avec l'élastomère, tels que, à titre non limitatif, les charges qui sont commercialisées par la société CABOT sous la dénomination « CRX 2000 », et qui sont décrites dans le document de brevet WO-A-96/37547.

A titre de charge inorganique renforçante, on peut également utiliser, à titre non limitatif, des alumines (de formule $Al_2O_3$), telles que les alumines à dispersibilité élevée qui sont décrites dans le document de brevet européen EP-A-810 258, ou encore des hydroxydes d'aluminium, tels que ceux décrits dans le document de brevet WO-A-99/28376.

Dans le cas où la charge renforçante ne contient qu'une charge inorganique renforçante et du noir de carbone, la fraction massique de ce noir de carbone dans ladite charge renforçante est préférentiellement choisie inférieure ou égale à 30 %.

Cependant, l'expérience montre que les propriétés précitées de la composition selon l'invention sont d'autant plus améliorées, que la charge renforçante qu'elle comprend contient une fraction massique plus élevée en charge inorganique renforçante, et que lesdites propriétés sont optimales lorsque ladite composition contient uniquement une charge inorganique renforçante, par exemple de la silice, à titre de charge renforçante. Ce dernier cas constitue donc un exemple préférentiel de composition de caoutchouc selon l'invention.

La composition de caoutchouc selon l'invention comprend en outre, de manière classique, un agent de liaison charge inorganique renforçante / matrice élastomère.

Par agent de liaison, on entend plus précisément un agent apte à établir une connexion suffisante de nature chimique et/ou physique entre la charge considérée et l'élastomère, tout en facilitant la dispersion de cette charge au sein de la matrice élastomère. Un tel agent de liaison, au moins bifonctionnel, a par exemple comme formule générale simplifiée « Y-T-X », dans laquelle :

- Y représente un groupe fonctionnel (fonction « Y ») qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);

- X représente un groupe fonctionnel (fonction « X ») capable de se lier physiquement et/ou chimiquement à l'élastomère, par exemple par l'intermédiaire d'un atome de soufre;

- T représente un groupe divalent permettant de relier Y et X.

Les agents de liaison ne doivent pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère. On peut utiliser tout agent de liaison connu pour, ou susceptible d'assurer efficacement dans les compositions de caoutchouc utilisables pour la fabrication de pneumatiques, la liaison (ou le

couplage) entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X et Y précitées. Des agents de liaison silice/élastomère, notamment, ont été décrits dans un grand nombre de documents, les plus connus étant des alkoxysilanes bifonctionnels tels que des alkoxysilanes polysulfurés.

On utilise en particulier des alkoxysilanes polysulfurés, dits « symétriques » ou « asymétriques » selon leur structure particulière, tels que décrits par exemple dans les brevets US-A-3 842 111, US-A-3 873 489, US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357, WO 03/002648 (ou US 2005/0016651) et WO 03/002649 (ou US 2005/0016650), qui énoncent en détail de tels composés connus.

Conviennent en particulier, sans que la définition ci-après soit limitative, des alkoxysilanes polysulfurés symétriques répondant à la formule générale (I) suivante :

(I) $Z - A - S_n - A - Z$, dans laquelle :

- n est un entier de 2 à 8 (de préférence de 2 à 5);
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$ en particulier le propylène);
- Z répond à l'une des formules ci-après :

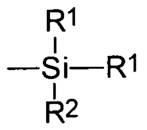 ; 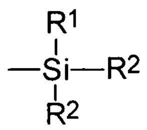 ; 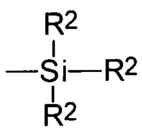 ,

dans lesquelles :

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle) ;
- les radicaux $R^2$, substitués ou non substitués, identiques ou différents entre eux, représentent un groupe hydroxyle, alkoxyle en $C_1$-$C_{18}$ ou cycloalkoxyle en $C_5$-$C_{18}$ (de préférence des groupes alkoxyle en $C_1$-$C_8$ ou cycloalkoxyle en $C_5$-$C_8$, plus préférentiellement des groupes alkoxyle en $C_1$-$C_4$, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, on comprendra que la valeur moyenne des « n » est un nombre fractionnaire, de préférence allant de 2 à 5 et plus préférentiellement proche de 4.

Comme alkoxysilanes polysulfurés, on citera plus particulièrement les polysulfures (notamment les disulfures, trisulfures ou tétrasulfures) de bis-(alkoxyl($C_1$-$C_4$)-alkyl($C_1$-$C_4$)silylalkyl($C_1$-$C_4$)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule $[(C_2H_5O)_3Si(CH_2)_3S_2]_2$ ou le disulfure de bis(triéthoxysilylpropyle), en abrégé TESPD, de formule $[(C_2H_5O)_3Si(CH_2)_3S]_2$. Le TESPD est commercialisé par exemple par la société Degussa sous les dénominations Si266 ou Si75 (dans le second cas, sous forme d'un mélange de disulfure (à 75 % en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4). On citera également les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure ou disulfure de bis-monoéthoxydiméthylsilylpropyle (en abrégé MESPT), qui

font l'objet de la demande de brevet international WO 02/083782 (ou US 2004/0132880) au nom des demanderesses.

A titre d'exemples d'agents de couplage autres que les alkoxysilanes polysulfurisés précités, on citera notamment des polyorganosiloxanes bifonctionnels ou encore des polysulfures d'hydroxysilane tels que décrits dans les demandes WO 02/30939 et WO 02/41041.

Dans les compositions conformes à l'invention, le taux d'agent de couplage est avantageusement inférieur à 20 pce, et préférentiellement inférieur à 10 pce, étant entendu qu'il est en général souhaitable d'en utiliser le moins possible et ajusté à la quantité de charge inorganique renforçante.

Les compositions conformes à l'invention comprennent également, outre ledit élastomère diénique monomodal couplé possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN'H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, et ladite charge inorganique renforçante, des plastifiants, des pigments, des anti-oxydants, des agents anti-fatigue, des cires anti-ozonantes, des promoteurs d'adhésion, des résines renforçantes ou plastifiantes, par exemple telles que décrites dans le document WO02/10269, des peroxydes et ou bismaléimides, des accepteurs (par exemple résine phénolique novolaque) ou des donneurs de méthylène (par exemple HMT ou H3M), un système de réticulation à base soit de soufre et/ou de peroxyde et/ou de bismaléimides, des activateurs de réticulation comprenant du monoxyde de zinc et de l'acide stéarique, des dérivés guanidiques (en particulier diphénylguanidine), des huiles d'extension, un ou plusieurs agents de recouvrement de la silice tels que des alcoxysilanes, des polyols, ou des aminés.

En particulier, ces compositions peuvent être telles que ledit élastomère diénique monomodal couplé possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN$^1$H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, est étendu à une huile aromatique ou non aromatique ou très faiblement aromatique, choisie dans le groupe constitué par une huile paraffinique, naphténique, huile MES, huile TDAE, les esters de glycérol, les résines plastifiantes hydrocarbonées présentant une haute Tg de préférence supérieure à 30 °C et les mélanges de tels plastifiants, avec une quantité d'huile d'extension comprise entre 0 et 50 pce.

L'invention a également pour objet un procédé de préparation d'une composition de caoutchouc réticulable conforme à l'invention. Ce procédé comprend :

(i) la réalisation, à une température maximale comprise entre 130 °C et 200 °C, d'un premier temps de travail thermomécanique (parfois qualifié de phase « non productive ») des constituants de base nécessaires, à l'exception du système de réticulation, de ladite composition comprenant ledit élastomère diénique monomodal couplé possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN$^1$H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de chaîne T1 déterminé par résonance magnétique nucléaire RMN2D$^1$H-$^{29}$Si allant de 80 à 100 % et une distribution monomodale des masses moléculaires en nombre des chaînes de polymère couplées, et une charge inorganique renforçante, à l'exception d'un système de réticulation, puis

(ii) la réalisation, à une température inférieure à ladite température maximale dudit premier temps, de préférence inférieure à 120 °C, d'un second temps de travail mécanique au cours duquel est incorporé ledit système de réticulation,

(iii) extruder ou calandrer la composition de caoutchouc ainsi obtenue, sous la forme désirée, pour fabriquer des semi-finis tels que des bandes de roulement.

Ce procédé peut également comprendre la préparation d'un élastomère diénique monomodal couplé possédant une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN$^1$H et exprimé en mmol/kg, $N_p$ représente le nombre de moles de polymère avant couplage par kilogramme de polymère, allant de 0,36 à 0,60 (soit un taux de fonction Si allant de 36 % à 60 %), un taux de fonction silanol (SiOH) en milieu de

chaîne T1 déterminé par résonance magnétique nucléaire RMN2D$^1$H-$^{29}$Si allant de 80 à 100 % et une distribution monomodale des masses moléculaires en nombre des chaînes de polymère couplées, consistant, dans une première étape, à faire réagir le(s) monomère(s) en présence ou non d'un solvant hydrocarboné inerte en présence d'un agent polaire chélatant possédant au moins sur deux atomes au moins un doublet non liant avec un initiateur de polymérisation, pour former un polymère diénique vivant et à faire réagir, dans une seconde étape, comme connu en soi, ledit polymère vivant avec un agent de couplage de chaînes polymères pour obtenir, après hydrolyse, le polymère diénique monomodal couplé possédant une fonction silanol en milieu de chaîne, préalablement à la réalisation des étapes (i), (ii) et (iii) précitées.

L'invention a également pour objet une bande de roulement de pneumatique qui est telle qu'elle comprend une composition de caoutchouc réticulable ou réticulée telle que celle susmentionnée, ou bien qui est telle qu'elle est constituée de cette composition.

En raison de l'hystérèse réduite qui caractérise une composition de caoutchouc selon l'invention à l'état réticulé, on notera qu'un pneumatique dont la bande de roulement comprend ladite composition présente une résistance au roulement avantageusement réduite.

Un pneumatique selon l'invention est tel qu'il comporte cette bande de roulement.

Les caractéristiques précitées de la présente invention, ainsi que d'autres, seront mieux comprises à la lecture de la description suivante de plusieurs exemples de réalisation de l'invention en relation avec les Figures 1 à 6 jointes qui représentent les distributions des masses moléculaires en poids Mi déterminées par la technique SEC, respectivement des copolymères A, B, E, F, G, H conformes à l'invention. Sur ces Figures, l'axe des X représente sous forme logarithmique décimale une échelle des masses moléculaires (Mi) en g/mole des polymères ; l'axe des Y représente une échelle arbitraire proportionnelle à la masse de polymère de masse moléculaire en nombre (Mi).

**EXEMPLE 1** :

**Synthèse de SBR selon un mode discontinu**

- **Copolymère A couplé et fonctionnel SiOH milieu de chaîne selon l'invention**
- **Copolymère B couplé préparé en présence d'un agent polaire non chélatant**
- **Copolymères SBR C, D « témoin » fonctionnalisé SiOH en bout de chaîne et non fonctionnel.**

**1) Préparation à l'aide d'un agent polaire chélatant d'un copolymère A couplé et fonctionnel Si-OH milieu de chaîne selon l'invention** :

Dans une bouteille « témoin » de 0,25 l maintenue sous azote et dans une autre bouteille identique destinée à la mise en oeuvre de l'invention, on introduit 105 grammes de cyclohexane (135 ml), du butadiène et du styrène, selon les rapports massiques respectifs 1/ 0,091/ 0,051. On introduit également 22 ppm de tétrahydrofurfuryl éthyle éther au titre d'agent promoteur de liaisons vinyliques. Après neutralisation des impuretés au moyen de n-butyllithium (n-BuLi), on ajoute 123 μmol de n-butyl lithium. La polymérisation est conduite dans chacune des deux bouteilles à 40 °C, et le taux de monomère converti est de 76 % au bout de 100 min. Ce taux est déterminé par pesée d'un extrait séché à 110 °C, sous la pression réduite de 200 mmHg.

Dans la bouteille « témoin » contenant le produit de polymérisation, on stoppe celle-ci avec un excès de méthanol par rapport au lithium. La viscosité inhérente (viscosité « initiale »), laquelle est mesurée à 25 °C à 0,1 g/dl dans le toluène, est de 0,94 dl/g. La masse moléculaire Mn de ce témoin, déterminée par la technique SEC3D, est de 92 000 g/mol, l'Ip est de 1,07.

• Couplage à l'aide d'un agent de couplage selon l'invention :

Dans la seconde bouteille contenant ce même produit de polymérisation, on injecte une solution de méthyltrichlorosilane (61 μmol). Le rapport Si/Li est donc de 0,50. Après 20 min. de réaction à 0 °C, on stoppe la réaction de couplage avec un excès d'eau par rapport au lithium afin d'hydrolyser la fonction SiCl restante. La viscosité inhérente « finale » mesurée est de 1,52 dl/g.

Le saut de viscosité, défini comme le rapport de ladite viscosité « finale » sur ladite viscosité « initiale », est ici de 1,62. La viscosité ML du polymère ainsi couplé est de 41.

On soumet le copolymère A couplé et fonctionnalisé SiOH milieu de chaîne ainsi obtenu à un traitement antioxydant par addition de 0,35 parties pour cent parties d'élastomères (pce) de 4,4'-méthylène-bis-2,6-tert-butylphénol et de 0,10 parties pour cent parties d'élastomères (pce) de N-(1,3-diméthylbutyl)-N'-phényl-p-phénylènediamine. On récupère ce copolymère par séchage en étuve à 60 °C sous courant d'azote.

La microstructure de ce copolymère A est déterminée par la RMN 13(:
Le taux massique de motifs 1,4-trans est de 34 %, celui de motifs 1,4-cis est de 25 % et celui de motifs 1,2 est de 41 % (chacun de ces trois taux se rapporte aux unités butadiène).

Le taux massique de styrène est de 27 %.

La masse moléculaire Mn de ce copolymère A, déterminée par la technique SEC conventionnelle, est de 139 000 g/mol, la masse moléculaire Mw est de 158 000 g/mol, l'Ip est de 1,14.

Le taux de fonctions $CH_3Si$ déterminé par RMN $^1H$ pour le copolymère A est de 4,15 mmol/kg ce qui, compte tenu de la masse moléculaire Mn, correspond à un taux T de 0,38.

L'analyse RMN 2D $^1H$-$^{29}Si$ présente une seule tâche de corrélation à $\delta_{si}$ = + 8 ppm. Elle permet de conclure à un taux de fonctionnalisation T1 de 100 %, c'est-à-dire à une forme 100 % $CH_3Si(SBR)_2OH$ milieu de chaîne.

Les analyses RMN et SEC illustrent le fait que la réaction de couplage réalisée en présence d'un agent polaire chélatant est particulièrement sélective.

**2) Préparation à l'aide d'un agent polaire non chélatant d'un copolymère B couplé et fonctionnalisé Si-OH milieu de chaîne :**

Cet essai est un témoin par rapport à l'invention.

Dans une bouteille « témoin » de 0,25 l maintenue sous azote et dans une autre bouteille identique destinée à la mise en oeuvre de l'invention, on introduit 105 grammes de cyclohexane (135 ml), du butadiène et du styrène, selon les rapports massiques respectifs 1/ 0,104/ 0,045. On introduit également 2 600 ppm de tétrahydrofuranne au titre d'agent promoteur de liaisons vinyliques. Après neutralisation des impuretés au moyen de n-BuLi, on ajoute 123 $\mu$mol de n-butyl lithium. La polymérisation est conduite dans chacune des deux bouteilles à 40 °C, et le taux de monomère converti est de 78 % au bout de 100 min. Ce taux est déterminé par pesée d'un extrait séché à 110 °C, sous la pression réduite de 200 mmHg.

Dans la bouteille « témoin » contenant le produit de polymérisation, on stoppe celle-ci avec un excès de méthanol par rapport au lithium. La viscosité inhérente (viscosité « initiale »), laquelle est mesurée à 25 °C à 0,1 g/dl dans le toluène, est de 0,92 dl/g. La masse moléculaire Mn de ce témoin, déterminée par la technique SEC3D, est de 98 000 g/mol, l'Ip est de 1,07.

• Couplage à l'aide d'un agent de couplage :

Dans l'autre bouteille contenant ce même produit de polymérisation, on injecte une solution de méthyltrichlorosilane (61 $\mu$mol). Le rapport Si/Li est donc de 0,50. Après 20 min. de réaction à 0 °C, on stoppe la réaction de couplage avec un excès d'eau par rapport au lithium afin d'hydrolyser la fonction SiCl restante. La viscosité inhérente « finale » mesurée est de 1,85 dl/g.

Le saut de viscosité, défini comme le rapport de ladite viscosité « finale » sur ladite viscosité « initiale », est ici de 2,01. La viscosité ML du polymère ainsi couplé est de 60.

On soumet le copolymère B couplé et fonctionnalisé SiOH milieu de chaîne ainsi obtenu à un traitement anti-oxydant par addition de 0,35 parties pour cent parties d'élastomères (pce) de 4,4'-méthylène-bis-2,6-tert-butylphénol et de 0,10 parties pour cent parties d'élastomères (pce) de N-(1,3-diméthylbutyl)-N'-phényl-p-phénylènediamine. On récupère ce copolymère par séchage en étuve à 60 °C sous courant d'azote.

La microstructure de ce copolymère B est déterminée par la RMN $^{13}C$ :
Le taux massique de BR 1,4-trans est de 34 %, celui de BR 1,4-cis est de 22 % et celui de BR 1,2 est de 44 % (chacun de ces trois taux se rapporte aux unités butadiène). Le taux massique de styrène est de 26 %.

La masse moléculaire Mn de ce copolymère B, déterminée par la technique SEC conventionnelle, est de 170 000 g/mol, la masse moléculaire Mw est de 209 000 g/mol, l'Ip est de 1,23.

Le taux global de fonctions $CH_3Si$ déterminé par RMN $^1H$ pour le copolymère **B** est de 4,2 mmol/kg, ce qui correspond à un taux T de 0,42.

L'analyse RMN 2D $^1H$-$^{29}Si$ présente trois tâches de corrélation à $\delta_{si}$ = + 8 ppm correspondant au produit attendu (forme $(SBR)_2SiCH_3OH$ Milieu de Chaîne), à $\delta_{si}$ = - 8 ppm correspondant au produit géminé (forme $SBRSiCH_3(OH)_2$ en bout de chaîne) et à $\delta_{si} \approx 0$ ppm correspondant au produit étoilé (forme $(SBR)_3SiCH_3$). L'intégration des aires de pics donne une répartition à 47 % pour l'aire à $\delta_{si}$ = + 8 ppm, à 35 % pour l'aire à $\delta_{si}$ = - 8 ppm et à 18 % pour l'aire à $\delta_{si} \approx 0$ ppm.

Le copolymère B possède une proportion de Si se trouvant sous forme de fonctions SiOH en milieu de chaîne de 47 %.

Les analyses RMN et SEC permettent de conclure à l'existence de plusieurs fonctions en proportions importantes caractérisant le fait que la réaction de couplage réalisée en présence d'un agent polaire non chélatant n'est pas sélective.

**3) Préparation d'un SBR C « témoin » fonctionnalisé SiOH en bout de chaîne** :

Ce SBR C « témoin » linéaire fonctionnalisé hexaméthylcyclotrisiloxane est préparé par une copolymérisation du styrène et du butadiène.

Dans une bouteille de 0,25 l maintenue sous azote, on introduit 105 grammes de cyclohexane (135 ml), du butadiène et du styrène, selon les rapports massiques respectifs 1/ 0,091/ 0,051. On introduit également 15 ppm de tétrahydrofurfuryl éthyle éther au titre d'agent promoteur de liaisons vinyliques. Après neutralisation des impuretés, on ajoute 90 $\mu$mol de n-butyl lithium. La polymérisation est conduite dans la bouteille à 40 °C, et le taux de monomère converti est de 74 % au bout de 120 min. Ce taux est déterminé par pesée d'un extrait séché à 110 °C, sous la pression réduite de 200 mmHg.

• Fonctionnalisation à l'aide de l'hexaméthylcyclotrisiloxane :

Dans la bouteille contenant ce produit de polymérisation, on injecte une solution d'hexaméthylcyclotrisiloxane (45 $\mu$mol). Le rapport Si/Li est donc de 1,50. Après 20 min. de réaction à 40 °C, on stoppe la réaction de fonctionnalisation avec un excès de méthanol par rapport au lithium. La viscosité inhérente « finale », laquelle est mesurée à 25 °C à 0,1 g/dl dans le toluène, est de 1,59 dl/g.

On soumet le copolymère C « témoin » linéaire fonctionnalisé hexaméthylcyclotrisiloxane ainsi obtenu à un traitement anti-oxydant par addition de 0,35 parties pour cent parties d'élastomères (pce) de 4,4'-méthylène-bis-2,6-tert-butylphénol et de 0,10 parties pour cent parties d'élastomères (pce) de N-(1,3-diméthylbutyl)-N'-phényl-p-phénylènediamine. On récupère ce copolymère par séchage en étuve à 60 °C sous courant d'azote.

La masse moléculaire Mn de ce copolymère C, déterminée par la technique SEC conventionnelle, est de 133 000 g/mol.

La viscosité ML du copolymère est de 39.

La microstructure de ce copolymère C est déterminée par RMN $^{13}C$, le taux massique de BR 1,4-trans est de 34 %, celui de BR 1,4-cis est de 25 % et celui de BR 1,2 est de 41 % (chacun de ces trois taux se rapporte aux unités butadiène).

Le taux massique de styrène est de 26 %.

L'analyse RMN 2D $^{1}H$-$^{29}Si$ permet de conclure à une fonction bout de chaîne de type $SBR(CH_3)_2SiOH$. Le taux de fonctions $(CH_3)_2Si$ déterminé par RMN $^{1}H$ pour le copolymère C est de 5,70 mmol/kg.

**4) Préparation d'un SBR D « témoin » non fonctionnel** :

Ce SBR « témoin » D non fonctionnel est préparé par une copolymérisation du styrène et du butadiène.

Dans une bouteille de 0,25 l maintenue sous azote et dans une autre bouteille identique, on introduit 105 grammes de cyclohexane (135 ml), du butadiène et du styrène, selon les rapports massiques respectifs 1/ 0,091/ 0,051. On introduit également 15 ppm de tétrahydrofurfuryl éthyle éther au titre d'agent promoteur de liaisons vinyliques. Après neutralisation des impuretés au moyen de n-BuLi, on ajoute 90 $\mu$mol de n-butyl lithium. La polymérisation est conduite dans la bouteille à 40 °C, et le taux de monomère converti est de 75 % au bout de 123 min. Ce taux est déterminé par pesée d'un extrait séché à 110 °C, sous la pression réduite de 200 mmHg.

Dans la bouteille contenant le produit de polymérisation, on stoppe celle-ci avec un excès de méthanol par rapport au lithium. La viscosité inhérente, laquelle est mesurée à 25°C à 0,1 g/dl dans le toluène, est de 1,59 dl/g.

On soumet le copolymère D « témoin » linéaire ainsi obtenu à un traitement anti-oxydant par addition de 0,35 parties pour cent parties d'élastomères (pce) de 4,4'-méthylène-bis-2,6-tert-butylphénol et de 0,10 parties pour cent parties d'élastomères (pce) de N-(1,3-diméthylbutyl)-N'-phényl-p-phénylènediamine. On récupère ce copolymère par séchage en étuve à 60° C sous courant d'azote.

La viscosité ML du copolymère est de 39.

La masse moléculaire Mn de ce copolymère D, déterminée par la technique SEC conventionnelle, est de 143 000 g/mol.

La microstructure de ce copolymère D est déterminée par RMN $^{13}C$ : le taux massique de BR 1,4-trans est de 33 %, celui de BR 1,4-cis est de 24 % et celui de BR 1,2 est de 43 % (chacun de ces trois taux se rapporte aux unités butadiène).

Le taux massique de styrène est de 26 %.

**EXEMPLE 2** :

**Synthèse de SBR selon un mode continu**

**Copolymères E, F, G, H couplés et fonctionnel SiOH milieu de chaîne selon l'invention ,en comparaison de copolymères SBR I, J, K, L « témoins » fonctionnalisés SiOH en bout de chaîne et non fonctionnels**

**1) Préparation d'un copolymère E couplé et fonctionnel Si-OH milieu de chaîne selon l'invention** :

On introduit en continu dans un réacteur de 32,5 l équipé d'un agitateur de type turbine du cyclohexane, du butadiène, du styrène et du tetrahydrofurfuryl éthyle éther, selon des débits massiques respectifs de 100 / 11 / 3,2 / 0,045. On introduit en entrée de ligne 160 micromoles de n-butyllithium (n-BuLi) pour 100 g de monomères afin de neutraliser les impuretés protiques apportées par les différents constituants présents dans l'entrée de ligne. A l'entrée du réacteur, on introduit 1160 $\mu$mol de n-BuLi pour 100 g de monomères.

On ajuste les différents débits de telle sorte que le temps de séjour moyen dans le réacteur soit de 40 minutes. La température est maintenue à 70 °C.

Le taux de conversion, qui est mesuré sur un prélèvement réalisé en sortie de réacteur, est de 96 %, et la viscosité inhérente, laquelle est mesurée à 25 °C à 0,1 g/dl dans le toluène, est de 1,28 dl/g. La masse moléculaire Mn mesurée par SEC3D est de 83 000 g/mol.

Enfin, en sortie de réacteur, on ajoute à la solution de polymère vivant (sur mélangeur statique en ligne) 638 micromoles pour 100 g de monomères de méthyltrichlorosilane en solution dans le cyclohexane. Après 3 min. de cette réaction de couplage, on ajoute à cette solution 580 mmol d'eau pour 100 g de monomère puis on soumet le copolymère à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.

On sépare le copolymère ainsi traité de sa solution par une opération de stripping à la vapeur d'eau, puis on le sèche sur un outil à cylindres à 100 °C pendant 20 min, pour obtenir le copolymère couplé et fonctionnalisé SiOH en milieu de chaîne selon l'invention.

La viscosité inhérente de ce copolymère E est de 1,69 dl/g, le saut de viscosité est de 1,32 et sa viscosité ML est de 55. La masse moléculaire du copolymère, déterminée par la technique SEC conventionnelle, est de 137 000 g/mol, la masse moléculaire Mw est de 237 000 mol/g, l'Ip est de 1,73.

La microstructure de ce copolymère E est déterminée par RMN $^{13}C$.

Le bloc SBR de ce copolymère E contient 25 % de styrène (en masse) et, pour sa partie butadiénique, 59 % de motifs vinyliques, 21 % de motifs 1,4 cis et 20 % de motifs 1,4trans.

Le taux de fonctions $CH_3Si$ déterminé par RMN $^1H$ pour le copolymère **E** est de 5,03 mmol/kg ce qui correspond à un taux T de 0,42.

L'analyse RMN 2D $^1H$-$^{29}Si$ présente deux tâches de corrélation à $\delta_{si}$ = + 8 ppm correspondant au produit attendu (forme $(SBR)_2SiCH_3OH$ milieu de Chaîne), à $\delta_{si}$ = - 15,4 ppm correspondant au produit géminé couplé (forme $SBRSiCH_3(OH)$-O-$SiCH_3$/OH)SBR). L'intégration des aires de pics donne une répartition à 94 % pour l'aire à $\delta_{si}$ = + 8 ppm, à 6 % pour l'aire à $\delta_{si}$ = - 15,4 ppm. C'est-à-dire, cette analyse permet de conclure à un taux de fonctionnalisation T1 de 94 %.

Les analyses RMN et SEC illustrent le fait que la réaction de couplage réalisée en présence d'un agent polaire chélatant est particulièrement sélective.

**2) Préparation d'un copolymère F couplé et fonctionnel Si-OH milieu de chaîne selon l'invention :**

On introduit en continu dans un réacteur de 32,5 l équipé d'un agitateur de type turbine du cyclohexane, du butadiène, du styrène et du tetrahydrofurfuryl éthyle éther, selon des débits massiques respectifs de 100 / 11 / 3,2 / 0,043. On introduit en entrée de ligne 200 micromoles de n-butyllithium (n-BuLi) pour 100 g de monomères afin de neutraliser les impuretés protiques apportées par les différents constituants présents dans l'entrée de ligne. A l'entrée du réacteur, on introduit 800 $\mu$mol de n-BuLi pour 100 g de monomères.

On ajuste les différents débits de telle sorte que le temps de séjour moyen dans le réacteur soit de 40 min. La température est maintenue à 70 °C.

Le taux de conversion, qui est mesuré sur un prélèvement réalisé en sortie de réacteur, est de 95 %, et la viscosité inhérente, laquelle est mesurée à 25 °C à 0,1 g/dl dans le toluène, est de 1,61 dl/g. La masse moléculaire Mn mesurée par la technique SEC3D est de 118 000 g/mol.

Enfin, en sortie de réacteur, on ajoute à la solution de polymère vivant (sur mélangeur statique en ligne) 560 micromoles pour 100 g de monomères de méthyltrichlorosilane en solution dans le cyclohexane. Après 3 min. de cette réaction de couplage, on ajoute à cette solution 400mmol d'eau pour 100 g de monomère puis on soumet le copolymère

à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.

On sépare le copolymère ainsi traité de sa solution par une opération de stripping à la vapeur d'eau, puis on le sèche sur un outil à cylindres à 100 °C pendant 20 min, pour obtenir le copolymère couplé et fonctionnalisé SiOH en milieu de chaîne selon l'invention.

La viscosité inhérente de ce copolymère F est de 2,18 dl/g, le saut de viscosité est de 1,35 et sa viscosité ML est de 81. La masse moléculaire du copolymère, déterminée par la technique SEC conventionnelle, est de 185 000 g/mol, la masse moléculaire Mw est de 323 000 mol/g, l'Ip est de 1,75.

La microstructure de ce copolymère F est déterminée par RMN $^{13}C$.

Le bloc SBR de ce copolymère F contient 25 % de styrène (en masse) et, pour sa partie butadiénique, 58 % de motifs vinylique, 21 % de motifs 1,4 cis et 21 % de motifs 1,4 trans.

Le taux de fonctions $CH_3Si$ déterminé par RMN $^1H$ pour le copolymère **F** est de 4,06 mmol/kg ce qui correspond à un taux T de 0,48.

L'analyse RMN 2D $^1H$-$^{29}Si$ présente trois tâches de corrélation à $\delta_{si}$ = + 8 ppm correspondant au produit attendu (forme $(SBR)_2SiCH_3OH$ Milieu de Chaîne), à $\delta_{si}$ = -8 ppm correspondant au produit géminé (forme $SBRSiCH_3(OH)_2$ Bout de Chaîne) et à $\delta_{si} \approx 0$ ppm correspondant au produit étoilé (forme $(SBR)_3SiCH_3$). L'intégration des aires de pics donne une répartition à 94% pour l'aire à $\delta_{si}$ = + 8 ppm, à 3 % pour l'aire à $\delta_{si}$ = -8 ppm et à 3 % pour l'aire à $\delta_{si} \approx 0$ ppm. C'est-à-dire, cette analyse permet de conclure à un taux de fonctionnalisation T1 de 94 %.

### 3) Préparation d'un copolymère G couplé et fonctionnel Si-OH milieu de chaîne selon l'invention :

On introduit en continu dans un réacteur de 32,5 l équipé d'un agitateur de type turbine du cyclohexane, du butadiène, du styrène et du tetrahydrofurfuryl éthyle éther, selon des débits massiques respectifs de 100 / 11 / 3,2 / 0,048. On introduit en entrée de ligne 160 micromoles de n-butyllithium (n-BuLi) pour 100g de monomères afin de neutraliser les impuretés protiques apportées par les différents constituants présents dans l'entrée de ligne. A l'entrée du réacteur, on introduit 1460 μmol de n-BuLi pour 100 g de monomères.

On ajuste les différents débits de telle sorte que le temps de séjour moyen dans le réacteur soit de 40 min. La température est maintenue à 70 °C.

Le taux de conversion, qui est mesuré sur un prélèvement réalisé en sortie de réacteur, est de 97 %, et la viscosité inhérente, laquelle est mesurée à 25 °C à 0,1 g/dl dans le toluène, est de 1,06 dl/g. La masse moléculaire Mn déterminée par la technique SEC3D est de 66 000 g/mol.

Enfin, en sortie de réacteur, on ajoute à la solution de polymère vivant (sur mélangeur statique en ligne) 803 micromoles pour 100 g de monomères de méthyltrichlorosilane en solution dans le cyclohexane. Après 3 min. de cette réaction de couplage, on ajoute à cette solution 730 mmol d'eau pour 100 g de monomère puis on soumet le copolymère à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.

On sépare le copolymère ainsi traité de sa solution par une opération de stripping à la vapeur d'eau, puis on le sèche sur un outil à cylindres à 100 °C pendant 20 min, pour obtenir le copolymère couplé et fonctionnalisé SiOH en milieu de chaîne selon l'invention.

La viscosité inhérente de ce copolymère G est de 1,40 dl/g, le saut de viscosité est de 1,32 et sa viscosité ML est de 37. La masse moléculaire du copolymère, déterminée par la technique SEC conventionnelle, est de 114 000 g/mol, la masse moléculaire Mw est de 190 000 mol/g, l'Ip est de 1,67.

La microstructure de ce copolymère G est déterminée par RMN $^{13}C$.

Le bloc SBR de ce copolymère G contient 25,1 % de styrène (en masse) et, pour sa partie butadiénique, 58 % de motifs vinyliques, 22 % de motifs 1,4 cis et 20 % de motifs 1,4 trans.

Le taux de fonctions $CH_3Si$ déterminé par RMN $^1H$ pour le copolymère **G** est de 6,16 mmol/kg ce qui correspond à un taux T de 0,40.

L'analyse RMN 2D $^1H$-$^{29}Si$ présente trois tâches de corrélation à $\delta_{si}$ = + 8 ppm correspondant au produit attendu (forme $(SBR)_2SiCH_3OH$ milieu de Chaîne), à $\delta_{si}$ = - 8 ppm correspondant au produit géminé (forme $SBRSiCH_3(OH)_2$ bout de Chaîne) et à $\delta_{si} \approx 0$ ppm correspondant au produit étoilé (forme $(SBR)_3SiCH_3$). L'intégration des aires de pics donne une répartition à 92% pour l'aire à $\delta_{si}$ = + 8 ppm, à 3% pour l'aire à $\delta_{si}$ = -8 ppm et à 5 % pour l'aire à $\delta_{si} \approx 0$ ppm. C'est-à-dire, cette analyse permet de conclure à un taux de fonctionnalisation T1 de 92 %.

### 4) Préparation d'un copolymère H couplé et fonctionnel Si-OH milieu de chaîne selon l'invention :

On introduit en continu dans un réacteur de 32,5 l équipé d'un agitateur de type turbine du cyclohexane, du butadiène, du styrène et du tetrahydrofurfuryl éthyle éther, selon des débits massiques respectifs de 100 / 9,8 / 4,4 / 0,0055. On introduit en entrée de ligne 150 micromoles de n-butyllithium (n-BuLi) pour 100 g de monomères afin de

neutraliser les impuretés protiques apportées par les différents constituants présents dans l'entrée de ligne. A l'entrée du réacteur, on introduit 1 175 μmol de n-BuLi pour 100 g de monomères.

On ajuste les différents débits de telle sorte que le temps de séjour moyen dans le réacteur soit de 40 min. La température est maintenue à 80 °C.

Le taux de conversion, qui est mesuré sur un prélèvement réalisé en sortie de réacteur, est de 89 %, et la viscosité inhérente, laquelle est mesurée à 25 °C à 0,1 g/dl dans le toluène, est de 1,27 dl/g. La masse moléculaire Mn déterminée par la technique SEC3D est de 76 000 g/mol.

Enfin, en sortie de réacteur, on ajoute à la solution de polymère vivant (sur mélangeur statique en ligne) 705 micromoles pour 100 g de monomères de méthyltrichlorosilane en solution dans le cyclohexane. Après 3 min. de cette réaction de couplage, on ajoute à cette solution 590 mmol d'eau pour 100 g de monomère puis on soumet le copolymère à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.

On sépare le copolymère ainsi traité de sa solution par une opération de stripping à la vapeur d'eau, puis on le sèche sur un outil à cylindres à 100 °C pendant 20 min, pour obtenir le copolymère couplé et fonctionnalisé SiOH en milieu de chaîne selon l'invention.

La viscosité inhérente de ce copolymère H est de 1,68 dl/g, le saut de viscosité est de 1,32 et sa viscosité ML est de 53. La masse moléculaire du copolymère, déterminée par la technique SEC conventionnelle, est de 130 000 g/mol, la masse moléculaire Mw est de 208 000 mol/g, l'Ip est de 1,60.

La microstructure de ce copolymère H est déterminée par RMN $^{13}C$.

Le bloc SBR de ce copolymère H contient 28 % de styrène (en masse) et, pour sa partie butadiénique, 24 % de motifs vinyliques, 30 % de motifs 1,4 cis et 46 % de motifs 1,4 trans.

Le taux de fonctions $CH_3Si$ déterminé par RMN $^1H$ pour le copolymère H est de 7,63 mmol/kg ce qui correspond à un taux T de 0,58.

L'analyse RMN 2D $^1H$-$^{29}Si$ présente deux tâches de corrélation à $\delta_{si}$ = + 8 ppm correspondant au produit attendu (forme $(SBR)_2SiCH_3OH$ milieu de Chaîne), à $\delta_{si}$ = - 15,4 ppm correspondant au produit géminé couplé (forme $SBRSiCH_3(OH)$-$O$-$SiCH_3(OH)SBR$). L'intégration des aires de pics donne une répartition à 92 % pour l'aire à $\delta_{si}$ = + 8 ppm, à 8% pour l'aire à $\delta_{si}$ = - 15,4 ppm. C'est-à-dire, cette analyse permet de conclure à un taux de fonctionnalisation T1 de 92 %.

### 5) Préparation d'un copolymère I « témoin » fonctionnalisé SiOH en bout de chaîne :

On introduit en continu dans un réacteur de 32,5 l équipé d'un agitateur de type turbine du cyclohexane, du butadiène, du styrène et du tetrahydrofurfuryl éthyle éther, selon des débits massiques respectifs de 100 / 11 / 3,2 / 0,037. On introduit en entrée de ligne 200 micromoles de n-butyllithium (n-BuLi) pour 100 g de monomères afin de neutraliser les impuretés protiques apportées par les différents constituants présents dans l'entrée de ligne. A l'entrée du réacteur, on introduit 530 μmol de n-BuLi pour 100 g de monomères.

On ajuste les différents débits de telle sorte que le temps de séjour moyen dans le réacteur soit de 40 min. La température est maintenue à 70 °C.

Le taux de conversion, qui est mesuré sur un prélèvement réalisé en sortie de réacteur, est de 98 %.

Enfin, en sortie de réacteur, on ajoute à la solution de polymère vivant (sur mélangeur statique en ligne) 265 micromoles pour 100 g de monomères d'hexaméthylcyclotrisiloxane en solution dans le cyclohexane. Puis on soumet le copolymère à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.

On sépare le copolymère ainsi traité de sa solution par une opération de stripping à la vapeur d'eau, puis on le sèche sur un outil à cylindres à 100 °C pendant 20 min, pour obtenir le copolymère fonctionnalisé SiOH en extrémité de chaîne.

La viscosité ML de ce copolymère I est de 53. La masse moléculaire du copolymère, déterminée par SEC conventionnelle, est de 123 000 g/mol.

La microstructure de ce copolymère I est déterminée par RMN $^{13}C$.

Le bloc SBR de ce copolymère I contient 25 % de styrène (en masse) et, pour sa partie butadiénique, 58 % de motifs vinyliques, 21 % de motifs 1,4 cis et 21 % de motifs 1,4 trans.

L'analyse RMN 2D $^1H$-$^{29}Si$ permet de conclure à l'existence d'une fonction bout de chaîne $SBR(CH_3)_2SiOH$. Le taux de fonctions $(CH_3)_2Si$ déterminé par RMN $^1H$ pour le copolymère **I** est de 5,85 mmol/kg.

### 6) Préparation d'un copolymère J « témoin » non fonctionnel :

Dans le cadre de la synthèse du copolymère J, qui est réalisée selon les conditions opératoires décrites à l'essai 5, sauf que du méthanol est ajouté à la place de l'hexaméthylcyclotrisiloxane dans un rapport MeOH/n-BuLi = 1,5.

La viscosité ML du copolymère J est de 53. La masse moléculaire du copolymère, déterminée par SEC conventionnelle, est de 123 000 g/mol.
La microstructure de ce copolymère J est déterminée par RMN $^{13}C$.
Le bloc SBR de ce copolymère J contient 25 % de styrène (en masse) et, pour sa partie butadiénique, 58 % de motifs vinyliques, 21 % de motifs 1,4 cis et 21 % de motifs 1,4 trans.

**7) Préparation d'un copolymère K « témoin » fonctionnalisé SiOH en bout de chaîne :**

On introduit en continu dans un réacteur de 32,5 l équipé d'un agitateur de type turbine du cyclohexane, du butadiène, du styrène et du tetrahydrofurfuryl éthyle éther, selon des débits massiques respectifs de 100 / 9,8 / 4,4 / 0,0043. On introduit en entrée de ligne 200 micromoles de n-butyllithium (n-BuLi) pour 100 g de monomères afin de neutraliser les impuretés protiques apportées par les différents constituants présents dans l'entrée de ligne. A l'entrée du réacteur, on introduit 610 µmol de n-BuLi pour 100 g de monomères.
On ajuste les différents débits de telle sorte que le temps de séjour moyen dans le réacteur soit de 40 min. La température est maintenue à 80 °C.
Le taux de conversion, qui est mesuré sur un prélèvement réalisé en sortie de réacteur, est de 93 %.
Enfin, en sortie de réacteur, on ajoute à la solution de polymère vivant (sur mélangeur statique en ligne) 265 micromoles pour 100 g de monomères d'hexaméthylcyclotrisiloxane en solution dans le cyclohexane. Puis on soumet le copolymère à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.
On sépare le copolymère ainsi traité de sa solution par une opération de stripping à la vapeur d'eau, puis on le sèche sur un outil à cylindres à 100 °C pendant 20 min, pour obtenir le copolymère fonctionnalisé SiOH en extrémité de chaîne.
La viscosité ML du copolymère K est de 54. La masse moléculaire du copolymère, déterminée par SEC conventionnelle, est de 119 000 g/mol.
La microstructure de ce copolymère K est déterminée par RMN $^{13}C$.
Le bloc SBR de ce copolymère K contient 27 % de styrène (en masse) et, pour sa partie butadiénique, 24 % de motifs vinyliques, 30 % de motifs 1,4 cis et 46 % de motifs 1,4 trans.
L'analyse RMN 2D $^{1}H$-$^{29}Si$ permet de conclure à l'existence d'une fonction Bout de chaîne $(CH_3)_2SiOH$. Le taux de fonctions $(CH_3)_2Si$ déterminé par RMN $^{1}H$ pour le copolymère **K** est de 6,0 mmol/kg.

**8) Préparation d'un copolymère L « témoin » non fonctionnel :**

Dans le cadre de la synthèse du copolymère L, qui est réalisée selon les conditions opératoires de l'essai 7, sauf que du méthanol est ajouté à la place de l'hexaméthylcyclotrisiloxane dans un rapport MeOH/n-BuLi = 1,5.
La viscosité ML est de 54. La masse moléculaire du copolymère, déterminée par SEC conventionnelle, est de 120 000 g/mol.
La microstructure de ce copolymère L est déterminée par RMN $^{13}C$.
Le bloc SBR de ce copolymère L contient 27 % de styrène (en masse) et, pour sa partie butadiénique, 24 % de motifs vinyliques, 30 % de motifs 1,4 cis et 46 % de motifs 1,4 trans.

**Exemple 3 :**

**Compositions comprenant soit un élastomère possédant une fonction silanol en milieu de chaîne selon l'invention, soit un élastomère non conforme à l'invention**

Dans cet exemple, les quatre élastomères SBR A, SBR B, SBR C et SBR D de Tg = - 38 °C préparés à l'exemple 1 ont été utilisés pour la préparation de compositions de caoutchouc A, B, C et D de type bande de roulement, comprenant chacune de la silice à titre de charge inorganique renforçante.
Chacune de ces compositions A, B, C ou D présente la formulation suivante (exprimée en pce : parties pour cent parties d'élastomère) :

| | |
|---|---|
| Elastomère | 100 |
| Silice (1) | 80 |
| N234 | 1 |
| Huile aromatique (« ENERFLEX 65 ») (5) | 39.5 |
| Agent de liaison (2) | 6.4 |

(suite)

| | |
|---|---|
| ZnO | 2.5 |
| Acide stéarique | 2 |
| Antioxydant (3) | 1.9 |
| Cire anti-ozone « C32ST » (6) | 1.5 |
| Diphénylguanidine | 1.5 |
| Soufre | 1.2 |
| Sulfénamide (4) | 2 |

Avec :

(1) = Silice « Zeosil 1165 MP » de la société Rhodia,
(2) = Agent de liaison « Si69 » de la société Degussa,
(3) = N-(1,3-diméthylbutyl)-N'-phényl-p-phénylènediamine,
(4) = N-cyclohexyl-2-benzothiazylsulfénamide,
(5) = Huile aromatique de la Société Hansen & Rosenthal European
(6) = Cire anti-ozone de la Société Repsol

Chacune des compositions suivantes est réalisée, dans un premier temps de travail thermo-mécanique, par deux étapes séparées par une phase de refroidissement, puis, dans un second temps de finition, par un travail mécanique.
On introduit successivement, dans un mélangeur interne de laboratoire de type "Banbury', dont la capacité est de 400 $cm^3$, qui est rempli à 70 % et dont la température initiale est d'environ 90 °C, l'élastomère, les deux tiers de la charge renforçante, l'agent de couplage et la diphénylguanidine, puis, environ une minute plus tard, le reste de la charge renforçante, l'huile aromatique, l'acide stéarique et la cire anti-ozone « C32ST ».
On conduit la première étape de travail thermo-mécanique pendant 4 à 5 minutes, jusqu'à une température maximale de tombée de 160 °C environ. Le bloc élastomère est alors récupéré et refroidi.
Puis on conduit une seconde étape de travail thermo-mécanique dans le même mélangeur pendant une durée de 3 à 4 minutes, avec ajout du monoxyde de zinc et de l'anti-oxydant, jusqu'à une température maximale de tombée de 160°C environ.
Le premier temps précité de travail thermo-mécanique est ainsi réalisé, étant précisé que la vitesse moyenne des palettes lors de ce premier temps est de 45 t/min.
On récupère le mélange ainsi obtenu, on le refroidit puis, dans un mélangeur externe (homo-finisseur), on ajoute le soufre et la sulfénamide à 30 °C, en mélangeant encore le tout pendant une durée de 3 à 4 minutes (second temps précité de travail mécanique).
Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.
La réticulation est effectuée à 150 °C pendant 40 min.
Les résultats sont consignés dans le tableau 1 ci-après.

Tableau 1 :

| Composition | A | B | C | D |
|---|---|---|---|---|
| Elastomère | SBR A | SBR B | SBR C | SBR D |
| ML (1+4) à 100 °C (gomme) | 41 | 60 | 39 | 39 |
| Propriétés à l'état non réticulé | | | | |
| ML (1+4) à 100 °C (« Mooney mélange ») | 47 | 49 | 73 | 44 |
| Propriétés à l'état réticulé | | | | |
| Shore A | 58.3 | 59.4 | 56.6 | 66.9 |
| MA10 | 3.72 | 4.17 | 3.48 | 5.92 |
| MA100 | 1.57 | 1.71 | 1.57 | 1.73 |
| MA300 | 2.08 | 1.97 | 2.11 | 1.84 |
| MA300/MA100 | 1.33 | 1.15 | 1.35 | 1.06 |
| Indice de cassage Scott à 20 °C | | | | |

(suite)

| | | | | |
|---|---|---|---|---|
| Propriétés à l'état réticulé | | | | |
| Fr (MPa) | 21.21 | 18.03 | 24.94 | 20.90 |
| Ar (%) | 520 | 535 | 577 | 597 |
| Pertes 60°C (%) | 25.9 | 34.7 | 19.4 | 31.6 |
| Propriétés dynamiques en fonctio n de la défor mation | | | | |
| Delta G* (MPa) à 23 °C | 1.12 | 1.16 | 0.88 | 5.39 |
| Tan (δ) max à 23 °C | 0.231 | 0.267 | 0.210 | 0.346 |

On notera que la composition A selon l'invention présente une valeur de Mooney « mélange » qui est comparable à celle de la composition D à base d'un élastomère non fonctionnel. La composition A selon l'invention présente une valeur de Mooney « mélange » qui est nettement inférieure à celle de la composition C à base d'un élastomère qui comprend une fonction SiOH en bout de chaîne. L'élastomère fonctionnel selon l'invention permet d'améliorer la mise en oeuvre par rapport à l'élastomère fonctionnel SiOH en bout de chaîne.

Concernant les propriétés à l'état réticulé, on notera que le rapport MA300/MA100 de la composition A selon l'invention est équivalent à celui de la composition C à base d'un élastomère qui comprend une fonction SiOH en bout de chaîne. La composition A selon l'invention présente un rapport MA300/MA100 qui est nettement supérieur à celui de la composition D à base d'un élastomère non fonctionnel. L'élastomère fonctionnel selon l'invention permet d'améliorer le renforcement par rapport à l'élastomère non fonctionnel.

On notera que la composition B présente un rapport MA300/MA100 qui est inférieur à celui de la composition A selon l'invention. Ce résultat démontre clairement que le renforcement est nettement amélioré uniquement pour la composition selon l'invention.

Concernant les propriétés dynamiques, on notera que les propriétés hystérétiques (à faibles et fortes déformations) de la composition A selon l'invention sont proches de celles de la composition C à base d'un élastomère qui comprend une fonction SiOH en bout de chaîne. La composition A selon l'invention présente des propriétés hystérétiques (à faibles et fortes déformations) qui sont nettement améliorées par rapport à celles de la composition D à base d'un élastomère non fonctionnel. L'élastomère fonctionnel selon l'invention permet d'améliorer les propriétés hystérétiques (à faibles et fortes déformations) par rapport à l'élastomère non fonctionnel. Ainsi, l'élastomère fonctionnel selon l'invention confère à la composition A un compromis de propriétés à l'état non réticulé (propriétés de mise en oeuvre) et à l'état réticulé (propriétés hystérétiques) avantageux.

On notera que la composition B présente des propriétés hystérétiques (à faibles et fortes déformations) qui sont dégradées par rapport à celles de la composition A selon l'invention. Ce résultat démontre clairement que les propriétés hystérétiques (à faibles et fortes déformations) sont meilleures uniquement pour la composition selon l'invention.

En d'autres termes, la composition A selon l'invention à base d'un élastomère qui comprend une fonction SiOH au milieu de la chaîne, dont la proportion de Si se trouvant sous forme de fonction SiOH en milieu de chaîne est de 100 %, présente des propriétés de caoutchouterie à l'état réticulé qui sont améliorées par rapport à celles de la composition D à base d'élastomère non fonctionnel du fait d'une hystérèse réduite et par rapport à la composition C à base d'élastomère comprenant une fonction SiOH en bout de chaîne du fait d'une aptitude à la mise en oeuvre améliorée.

La composition A selon l'invention à base d'un élastomère qui comprend une fonction SiOH au milieu de la chaîne, dont la proportion de Si se trouvant sous forme de fonction SiOH en milieu de chaîne est de 100 %, présente des propriétés de caoutchouterie à l'état réticulé qui sont améliorées par rapport à celles de la composition B, dont la proportion de Si se trouvant sous forme de fonction SiOH en milieu de chaîne est de 47 %, du fait d'une hystérèse réduite à faibles et fortes déformations et du fait d'un renforcement amélioré.

**Exemple 4 :**

**Compositions comprenant soit un élastomère possédant une fonction silanol en milieu de chaîne selon l'invention, soit un élastomère non conforme à l'invention**

Dans cet exemple, les trois élastomères SBR E, SBR I et SBR J de Tg = - 25 °C préparés selon l'exemple 2 ont été utilisés pour la préparation de compositions de caoutchouc E, I et J de type bande de roulement, comprenant chacune de la silice à titre de charge inorganique renforçante.

Chacune de ces compositions E, I et J présente la formulation suivante (exprimée en pce : parties pour cent parties d'élastomère) :

| | |
|---|---|
| Elastomère | 100 |
| Silice (1) | 80 |
| N234 | 1 |
| Huile MES (7) | 15 |
| Résine (5) | 15 |
| Agent de liaison (2) | 6.4 |
| ZnO | 2.5 |
| Acide stéarique | 2 |
| Antioxydant (3) | 1.9 |
| Cire anti-ozone « C32ST » (6) | 1.5 |
| Diphénylguanidine | 1.5 |
| Soufre | 1.2 |
| Sulfénamide (4) | 2 |

Avec :

(1) = Silice « Zeosil 1165 MP » de la société Rhodia,
(2) = Agent de liaison « Si69 » de la société Degussa,
(3) = N-(1,3-diméthylbutyl)-N'-phényl-p-phénylènediamine,
(4) = N-cyclohexyl-2-benzothiazylsulfénamide,
(5) = Résine Dercolyte L120 de la société DRT ou Sylvagum TR7125C de la société Arizona
(6) = Cire anti-ozone de la société Repsol
(7) = Catenex® SNR de la société Shell

Chacune des compositions suivantes est réalisée, dans un premier temps de travail thermo-mécanique, par deux étapes séparées par une phase de refroidissement, puis, dans un second temps de finition, par un travail mécanique.

On introduit successivement, dans un mélangeur interne de laboratoire de type "Banbury', dont la capacité est de 400 $cm^3$, qui est rempli à 70 % et dont la température initiale est d'environ 90 °C, l'élastomère, les deux tiers de la charge renforçante, l'agent de couplage et la diphénylguanidine, puis, environ une minute plus tard, le reste de la charge renforçante, l'huile, la résine, l'acide stéarique et la cire anti-ozone « C32ST ».

On conduit la première étape de travail thermo-mécanique pendant 4 à 5 minutes, jusqu'à une température maximale de tombée de 160°C environ. Le bloc élastomère est alors récupéré et refroidi.

Puis on conduit une seconde étape de travail thermo-mécanique dans le même mélangeur pendant une durée de 3 à 4 minutes, avec ajout du monoxyde de zinc et de l'anti-oxydant, jusqu'à une température maximale de tombée de 160 °C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30 °C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150 °C pendant 40 min.

Les résultats sont consignés dans le tableau 2 ci-après.

Tableau 2 :

| Composition | E | I | J |
|---|---|---|---|
| Elastomère | SBR E | SBR I | SBR J |
| ML (1+4) à 100 °C (gomme) | 55 | 53 | 53 |
| Propriétés à l'état non réticulé | | | |
| ML (1+4) à 100 °C (« Mooney mélange ») | 69 | 98 | 67 |

(suite)

| | | | |
|---|---|---|---|
| Propriétés à l'état réticulé | | | |
| Shore A | 61.1 | 61.3 | 59.9 |
| MA10 | 4.29 | 4.49 | 4.40 |
| MA100 | 1.91 | 1.87 | 1.72 |
| MA300 | 2.51 | 2.59 | 1.91 |
| MA300/MA100 | 1.31 | 1.39 | 1.11 |
| Indice de cassage Scott à 20°C | | | |
| Fr (MPa) | 17.83 | 17.69 | 18.13 |
| Ar (%) | 411 | 399 | 445 |
| Pertes 60 °C (%) | 27.7 | 25.0 | 29.6 |
| Propriétés dynamiques en fonction de la déformation | | | |
| Delta G* (MPa) à 40 °C | 0.85 | 0.74 | 1.08 |
| Tan ($\delta$) max à 40 °C | 0.221 | 0.201 | 0.231 |

On notera que la composition E selon l'invention présente une valeur de Mooney « mélange » qui est comparable à celle de la composition J à base d'un élastomère non fonctionnel. La composition E selon l'invention présente une valeur de Mooney « mélange » qui est nettement inférieure à celle de la composition I à base d'un élastomère qui comprend une fonction SiOH en bout de chaîne. L'élastomère fonctionnel selon l'invention permet d'améliorer la mise en oeuvre par rapport à l'élastomère fonctionnel SiOH en bout de chaîne.

Concernant les propriétés à l'état réticulé, on notera que le rapport MA300/MA100 de la composition E selon l'invention est proche de celui de la composition I à base d'un élastomère qui comprend une fonction SiOH en bout de chaîne. La composition E selon l'invention présente un rapport MA300/MA100 qui est nettement supérieur à celui de la composition J à base d'un élastomère non fonctionnel. L'élastomère fonctionnel selon l'invention permet d'améliorer le renforcement par rapport à l'élastomère non fonctionnel.

Concernant les propriétés dynamiques, on notera que les propriétés hystérétiques (à faibles et fortes déformations) de la composition E selon l'invention sont proches de celles de la composition I à base d'un élastomère qui comprend une fonction SiOH en bout de chaîne. La composition E selon l'invention présente des propriétés hystérétiques (à faibles et fortes déformations) qui sont améliorées par rapport à celles de la composition J à base d'un élastomère non fonctionnel. L'élastomère fonctionnel selon l'invention permet d'améliorer les propriétés hystérétiques (à faibles et fortes déformations) par rapport à l'élastomère non fonctionnel.

En d'autres termes, la composition E selon l'invention à base d'élastomère qui comprend une fonction SiOH au milieu de la chaîne, et dont la proportion de Si se trouvant sous forme de fonction SiOH en milieu de chaîne est de 94 %, présente des propriétés de caoutchouterie à l'état réticulé qui sont améliorées par rapport à celles de la composition J à base d'élastomère non fonctionnel du fait d'une hystérèse réduite d'une part et par rapport à la composition I à base d'élastomère comprenant une fonction SiOH en bout de chaîne du fait d'une aptitude à la mise en oeuvre améliorée d'autre part.

**Exemple 5 :**

**Compositions comprenant soit un élastomère possédant une fonction silanol en milieu de chaîne selon l'invention, soit un élastomère non conforme à l'invention**

Dans cet exemple, les trois élastomères SBR H, SBR K et SBR L de Tg = -48°C préparés selon l'exemple 2 ont été utilisés pour la préparation de compositions de caoutchouc H, K, et L de type bande de roulement, comprenant chacune de la silice à titre de charge inorganique renforçante.

Chacune de ces compositions H, K, et L présente la formulation suivante (exprimée en pce : parties pour cent parties d'élastomère) :

| | |
|---|---|
| Elastomère | 100 |
| Silice (1) | 50 |
| N234 | 1 |
| Agent de liaison (2) | 4 |
| ZnO | 3 |

(suite)

| | |
|---|---|
| Acide stéarique | 1.9 |
| Antioxydant (3) | 1.9 |
| Diphénylguanidine | 1 |
| Soufre | 1.5 |
| Sulfénamide (4) | 1.8 |

Avec :

(1) = Silice « Zeosil 1165 MP » de la société Rhodia,
(2) = Agent de liaison « Si69 » de la société Degussa,
(3) = N-(1,3-diméthylbutyl)-N'-phényl-p-phénylènediamine,
(4) = N-cyclohexyl-2-benzothiazylsulfénamide,

Chacune des compositions suivantes est réalisée, dans un premier temps de travail thermo-mécanique, par une étape de malaxage, puis, dans un second temps de finition, par un travail mécanique.

On introduit successivement, dans un mélangeur interne de laboratoire de type "Banbury', dont la capacité est de 400 $cm^3$, qui est rempli à 70 % et dont la température initiale est d'environ 70 °C, l'élastomère, la charge renforçante, l'agent de couplage et la diphénylguanidine, puis, environ une minute plus tard, l'acide stéarique, l'anti-oxydant et le monoxyde de zinc.

On conduit la première étape de travail thermo-mécanique pendant 4 à 5 minutes, jusqu'à une température maximale de tombée de 160 °C environ. Le bloc élastomère est alors récupéré et refroidi.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30 °C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150 °C pendant 40 min.

Les résultats sont consignés dans le tableau 3 ci-après.

Tableau 3 :

| Composition | H | K | L |
|---|---|---|---|
| Elastomère | SBR H | SBR K | SBR L |
| ML (1+4) à 100 °C (gomme) | 53 | 54 | 54 |
| Propriétés à l'état non réticulé | | | |
| MS (1+4) à 100 °C (« Mooney mélange ») | 57 | 74 | 52 |
| Propriétés à l'état réticulé | | | |
| Shore A | 66.0 | 67.1 | 70.5 |
| MA10 | 5.70 | 5.94 | 6.85 |
| MA100 | 2.55 | 2.64 | 2.59 |
| MA300 | 2.94 | 3.00 | 2.70 |
| MA300/MA100 | 1.15 | 1.14 | 1.05 |
| Indice de cassage Scott à 20°C | | | |
| Fr (MPa) | 19.80 | 15.92 | 20.27 |
| Ar (%) | 351 | 308 | 391 |
| Pertes 60 °C (%) | 14.8 | 12.6 | 21.6 |
| Propriétés dynamiques en fonction de la déformation | | | |
| Delta G* (MPa) à 23 °C | 0.76 | 0.66 | 2.44 |
| Tan (δ) max à 23 °C | 0.129 | 0.109 | 0.186 |

On notera que la composition H selon l'invention présente une valeur de Mooney « mélange » qui est comparable à celle de la composition L à base d'un élastomère non fonctionnel. La composition H selon l'invention présente une valeur de Mooney « mélange » qui est nettement inférieure à celle de la composition K à base d'un élastomère qui comprend une fonction SiOH en bout de chaîne. L'élastomère fonctionnel selon l'invention permet d'améliorer la mise en oeuvre par rapport à l'élastomère fonctionnel SiOH en bout de chaîne.

Concernant les propriétés à l'état réticulé, on notera que le rapport MA300/MA100 de la composition H selon l'invention est équivalent à celui de la composition K à base d'un élastomère qui comprend une fonction SiOH en bout de chaîne. La composition H selon l'invention présente un rapport MA300/MA100 qui est nettement supérieur à celui de la composition L à base d'un élastomère non fonctionnel. L'élastomère fonctionnel selon l'invention permet d'améliorer le renforcement par rapport à l'élastomère non fonctionnel.

Concernant les propriétés dynamiques, on notera que les propriétés hystérétiques (à faibles et fortes déformations) de la composition H selon l'invention sont proches de celles de la composition K à base d'un élastomère qui comprend une fonction SiOH en bout de chaîne. La composition H selon l'invention présente des propriétés hystérétiques (à faibles et fortes déformations) qui sont nettement améliorées par rapport à celles de la composition L à base d'un élastomère non fonctionnel. L'élastomère fonctionnel selon l'invention permet d'améliorer les propriétés hystérétiques (à faibles et fortes déformations) par rapport à l'élastomère non fonctionnel.

En d'autres termes, la composition H selon l'invention à base d'élastomère qui comprend une fonction SiOH au milieu de la chaîne, et dont la proportion de Si se trouvant sous forme de fonction SiOH en milieu de chaîne est de 92 %, présente des propriétés de caoutchouterie qui sont améliorées à l'état réticulé par rapport à celles de la composition L à base d'élastomère non fonctionnel du fait d'une hystérèse réduite d'une part et à l'état non réticulé par rapport à la composition K à base d'élastomère comprenant une fonction SiOH en bout de chaîne du fait d'une aptitude à la mise en oeuvre améliorée d'autre part.

<u>Mesures et tests utilisés - Techniques expérimentales utilisées pour la caractérisation avant cuisson des polymères obtenus</u> :

(a) Détermination de la distribution de masses molaires par la technique de chromatographie d'exclusion stérique (SEC conventionnelle)

On a utilisé la technique SEC (chromatographie d'exclusion par la taille) pour déterminer les distributions de masses moléculaires relatives à des échantillons de ces polymères. A partir de produits étalons dont les caractéristiques sont décrites dans l'exemple 1 du document de brevet européen EP-A-692 493, cette technique a permis d'évaluer pour un échantillon une masse moléculaire en nombre (Mn) qui a une valeur relative, à la différence de celle déterminée par osmométrie, ainsi qu'une masse moléculaire moyenne en poids (Mw). On en a déduit l'indice de polydispersité (Ip = Mw/Mn) de cet échantillon, calculé via un étalonnage dit de MOORE.

Selon cette technique, on sépare physiquement les macromolécules suivant leurs tailles respectives à l'état gonflé, dans des colonnes remplies d'une phase stationnaire poreuse. Avant de mettre en oeuvre cette séparation, on solubilise l'échantillon de polymère à une concentration d'environ 1 g/l dans du tétrahydrofurane. Puis la solution est filtrée sur filtre de porosité 0,45 μm avant injection.

On utilise pour la séparation précitée un chromatographe commercialisé sous la dénomination « WATERS Alliance 2690 » muni d'un dégazeur en ligne. Le solvant d'élution est le tétrahydrofurane, le débit est de 1 ml/min, la température du système est de 35 °C et la durée d'analyse est de 30 min. On utilise un jeu de deux colonnes « WATERS » montées en série dont le type est « STYRAGEL HT6E ».

| *Numéro* | *Marque* | *Domaine de masses molaires (g/mol)* | *Longueur (mm)* | *Diamètre interne (mm)* | *Taille des particules (μm)* | *Désignation commerciale* | *Références (à titre indicatif)* |
|---|---|---|---|---|---|---|---|
| Colonne 1 | WATERS | 2 000 - $10^7$ | 300 | 7,8 | 10 | Styragel HT6E | WAT044219 |
| Colonne 2 | WATERS | 2 000 - $10^7$ | 300 | 7,8 | 10 | Styragel HT6E | W A T044219 |

Le volume injecté de la solution d'échantillon de polymère est de 100 μl. Le détecteur est un réfractomètre différentiel «WATERS» dont le modèle est «2410». On utilise également un logiciel d'exploitation des données chromatographiques, dont la dénomination commerciale est «WATERS EMPOWER».

Les masses molaires moyennes calculées sont relatives à une courbe d'étalonnage réalisée pour des SBR de microstructure suivante : 25 % massique de motifs type styrène, 23 % massique de motifs type 1-2 et 50 % massique de motifs type 1-4 trans.

(b) Détermination de la distribution de masses molaires par la technique de chromatographie d'exclusion stérique Triple Détection (SEC3D)

On a utilisé la technique SEC (chromatographie d'exclusion par la taille) pour déterminer les distributions de masses moléculaires relatives à des échantillons de ces polymères.

Principe de la mesure :

Cette technique permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) peuvent également être calculées. On en déduit l'indice de polydispersité (Ip = Mw/Mn) de l'échantillon.

Selon cette technique, on sépare physiquement les macromolécules suivant leurs tailles respectives à l'état gonflé, dans des colonnes remplies d'une phase stationnaire poreuse. Avant de mettre en oeuvre cette séparation, on solubilise l'échantillon de polymère à une concentration d'environ 1 g/l dans du tétrahydrofurane. Puis la solution est filtrée sur filtre de porosité 0,45 $\mu$m avant injection.

Analyse SEC3D :

L'appareillage utilisé est un chromatographe « WATERS alliance ». Le solvant d'élution est le tétrahydrofuranne, le débit de 0,5 ml/min, la température du système de 35°C. On utilise un jeu de quatre colonnes POLYMER LABORATORIES en série, de dénominations commerciales : deux «MIXED A LS» et deux «MIXED B LS».

Le volume injecté de la solution de l'échantillon de polymère est 100 $\mu$l. Le système de détection utilisé est le «TDA 302 de VISCOTEK», il est composé d'un réfractomètre différentiel, d'un viscosimètre différentiel et d'un détecteur de diffusion de la lumière à 90°. Pour ces 3 détecteurs, la longueur d'onde est de 670nm. Pour le calcul des masses molaires moyennes est intégrée la valeur de l'incrément d'indice de réfraction dn/dC de la solution de polymère, valeur préalablement définie dans le tétrahydrofuranne à 35°C et 670nm. Le logiciel d'exploitation des données est le système « OMNISEC de VISCOTEK».

(c) Pour les polymères et les compositions de caoutchouc, les viscosités Mooney ML (1+4) à 100 °C sont mesurées selon la norme ASTM D-1646.

On utilise un consistomètre oscillant tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en «unité Mooney» (UM, avec 1 UM = 0,83 N.m).

(d) Les températures de transition vitreuse Tg des polymères sont mesurées au moyen d'un calorimètre différentiel («differential scanning calorimeter»).

(e) La fonctionnalisation $CH_3Si(SBR)_2OH$ en milieu de chaîne ou $SBR(CH_3)_2SiOH$ en bout de chaîne est caractérisée par RMN 2D $^1H$-$^{29}Si$ et quantifiée par RMN$^1H$.

Le spectre RMN 2D $^1H$-$^{29}Si$ permet de vérifier la nature de la fonction grâce aux valeurs de déplacements chimiques des noyaux Silicium et des protons au voisinage $^2J$ (via 2 liaisons). Elle utilise une valeur de constante de couplage $^2J_{1H\text{-}29Si}$ de 8 Hz. Le déplacement chimique du silicium du produit $CH_3Si(SBR)_2OH$ en milieu de chaîne est d'environ 8 ppm, celui de la forme $SBR(CH_3)_2SiOH$ en bout de chaîne autour de 11-12 ppm.

Le spectre RMN $^1H$ permet de quantifier la fonction par intégration du signal caractéristique des protons du groupement Méthyl porté par le silicium C**H**$_3$Si, situé autour de $\delta$ = 0 ppm. Les échantillons sont solubilisés dans le sulfure de carbone ($CS_2$). 100 $\mu$L de cyclohexane deutéré ($C_6D_{12}$) sont ajoutés pour le signal de lock. Les analyses RMN sont réalisées sur un spectromètre 500 MHz BRUKER équipé d'une sonde «large bande» BBI 5 mm. Pour l'expérience RMN $^1H$ quantitative, la séquence utilise une impulsion 30° et un délai de répétition de 2 secondes.

(f) La technique RMN $^{13}C^1$ est utilisée pour déterminer la microstructure des élastomères obtenus. Les analyses

RMN $^{13}C$ sont réalisées sur un spectromètre 250 MHz BRUKER équipé d'une sonde DUAL $^{13}C$-$^{1}H$ 10 mm. L'élastomère est solubilisé dans $CDCl_3$ à une concentration d'environ 75 g/L. L'expérience RMN $^{13}C$ quantitative, utilise une séquence avec découplage $^{1}H$ et suppression de l'effet Overhauser (inverse gated $^{1}H$-decoupling), une impulsion 90° et un délai de répétition = 6 s. La largeur spectrale est 200 ppm, le nombre de scans est 8192. Les spectres sont calibrés sur le pic central du triplet du $CDCl_3$ à 77 ppm.

[1]**Ref 1:** Beebe, D. H. Polymer 1978, 19, 231-33. **Ref 2** : Bradbury, J. H.; Elix, J. A.; Perera, M. C. S. Journal of Polymer Science 1988, 26, 615-26. ; **Ref 3** : durbetaki, A. J.; miles, C. M. analytical chemistry 1965, 37, 1231-35. ; **Ref 4:** Gronski, W.; Murayama, N.; Cantow, H.-J. Polymer 1976, April, 358-60. ; **Ref 5:** Kobayashi, E.; Furakawa, J.; Ochiai, M.; Tsujimoto, T. European Polymer J. 1983, 10, 871-75.

(g) Pour les polymères, la viscosité inhérente à 25 °C d'une solution de polymère à 0,1 g/dl dans le toluène, est mesurée à partir d'une solution de polymère sec :

PRINCIPE :

La viscosité inhérente est déterminée par la mesure du temps d'écoulement t de la solution de polymère et du temps d'écoulement $t_o$ du toluène, dans un tube capillaire.

Dans un tube Ubbelhode (diamètre du capillaire 0.46 mm, capacité 18 à 22 ml), placé dans un bain thermostaté à 25 ± 0,1 °C, le temps d'écoulement du toluène et celui de la solution polymère à 0,1 g/dl sont mesurés.

La viscosité inhérente est obtenue par la relation suivante :

$$\eta_{inh} = \frac{1}{C} \ln\left[\frac{(t)}{(t_o)}\right]$$

avec :

- **c** : concentration de la solution toluénique de polymère en g/dl ;
- **t** : temps d'écoulement de la solution toluénique de polymère en secondes ;
- $\mathbf{t_o}$ : temps d'écoulement du toluène en secondes ;
- $\eta_{inh}$ : viscosité inhérente exprimée en dl/g.

(h) Essais de traction :

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les modules sécants nominaux (ou contraintes apparentes, en MPa) à 10 % d'allongement (noté MA10), 100 % d'allongement (noté MA100) et 300 % d'allongement (noté MA300). On mesure également les contraintes à la rupture (en MPa) et les allongements à la rupture (en %). Toutes ces mesures de traction sont effectuées dans les conditions normales de température (23 ± 2 °C) et d'hygrométrie (50 ± 5 % d'humidité relative), selon la norme française NF T 40-101 (décembre 1979).

(i) Dureté Shore A :

La dureté Shore A des compositions après cuisson est appréciée conformément à la norme ASTM D 2240-86.

(j) Propriétés dynamiques :

Les propriétés dynamiques $\Delta G^*$ max et $\tan(\delta)_{max}$ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10 Hz, dans les conditions normales de température (23 °C ou 40 °C) selon la norme ASTM D 1349-99. On effectue un balayage en amplitude de déformation de 0,1 à 50 % (cycle aller), puis de 50 % à 1 % (cycle retour). Les résultats exploités sont le module complexe de cisaillement dynamique (G*), le module complexe de cisaillement dynamique G" exprimé par la mesure du maximum de G", noté G" max 23 °C à une amplitude de 0,1 à 50 % et à une amplitude de déformation de 50 % et le facteur de perte tan(δ). Pour le cycle retour, on indique la valeur maximale de tan(δ) observée, noté $\tan(\delta)_{max}$, ainsi que l'écart de module complexe ($\Delta G^*$) entre les valeurs à 0,15 et 50% de déformation (effet Payne).

(k) Mesures des propriétés hystérétiques :
Les propriétés hystérétiques peuvent être évaluées par la mesure des pertes d'énergie par rebond des échantillons à énergie imposée mesurée au $6^e$ choc, dans les conditions normales de température (23 °C) ou à des températures plus élevées (60 °C) et exprimées en % selon la relation suivante :

$$PH\ (\%) = 100\ [(W0 - W1) / W0]$$

avec W0 : énergie fournie; W1 : énergie restituée.

## Revendications

1. Elastomère diénique couplé possédant une fonction silanol **caractérisé en ce qu'**il comporte une fonction silanol en milieu de chaîne, un taux de fonction Si global T, qui est le rapport $N_s/N_p$, dans lequel $N_s$ représente le nombre de moles de silicium liées au polymère couplé déterminé par résonance magnétique nucléaire RMN$^1$H et exprimé en mmol/kg, $N_p$ représente le nombre de mmoles de polymère avant couplage par kilogramme de polymère, allant de 0,36 à 0,60, un taux de fonction silanol (SiOH) en milieu de chaîne T1 qui est le rapport correspondant au nombre de moles de fonctions SiOH sur le nombre de moles de Silicium (Si), déterminé par résonance magnétique nucléaire RMN2D$^1$H-$^{29}$Si allant de 80 à 100 % et une distribution monomodale des masses moléculaires en nombre des chaînes de polymère couplées.

2. Procédé d'obtention d'un élastomère diénique monomodal couplé possédant une fonction silanol en milieu de chaîne selon la revendication 1, **caractérisé en ce que** ledit procédé consiste dans une première étape, à faire réagir le(s) monomère(s), éventuellement en présence ou non d'un solvant hydrocarboné inerte, avec un initiateur de polymérisation en présence d'un agent polaire chélatant possédant sur au moins deux atomes au moins un doublet non liant, et à faire réagir, dans une seconde étape, le polymère diénique vivant avec un agent de couplage de chaînes polymères en présence d'un solvant hydrocarboné inerte pour obtenir, après hydrolyse, le polymère diénique monomodal couplé possédant une fonction silanol en milieu de chaîne.

3. Procédé selon la revendication 2, **caractérisé en ce que** l'agent polaire chélatant est choisi dans le groupe constitué par les agents comprenant au moins une fonction amine tertiaire ou au moins une fonction éther.

4. Procédé selon l'une des revendications 2 à 3, **caractérisé en ce que** l'agent de couplage de chaînes polymères répond à la formule $RSiX_3$ dans laquelle R représente un groupe alcoyle primaire ou secondaire, cycloalcoyle, aryle ayant de 1 à 20 atomes de carbone, et X représente un atome d'halogène et de préférence le chlore ou le brome.

5. Procédé selon l'une des revendications 2 à 4, **caractérisé en ce que** le rapport quantitatif agent de couplage / métal de l'initiateur des chaînes polymères vivantes est compris entre 0,4 et 1,0.

6. Procédé selon l'une des revendications 2 à 5, **caractérisé en ce que** le solvant de polymérisation est le même que le solvant de couplage des chaînes polymères.

7. Elastomère diénique monomodal couplé possédant une fonction silanol en milieu de chaîne susceptible d'être obtenu par un procédé selon l'une quelconque des revendications 2 à 6.

8. Composition de caoutchouc réticulable ou réticulée, utilisable pour constituer une bande de roulement de pneumatique, à base d'au moins une charge inorganique renforçante et d'au moins un élastomère diénique monomodal couplé possédant une fonction silanol en milieu de chaîne selon la revendication 1.

9. Composition selon la revendication 8, **caractérisée en ce que** ledit élastomère diénique couplé monomodal possédant une fonction silanol en milieu de chaîne est issu d'un copolymère butadiène/ vinylaromatique préparé en solution.

10. Composition de caoutchouc selon la revendication 8 ou 9, **caractérisée en ce que** ledit élastomère diénique couplé monomodal possédant une fonction silanol en milieu de chaîne présente une masse moléculaire moyenne en

nombre Mn qui est comprise entre 100 000 g/mol et 350 000 g/mol et préférentiellement comprise entre 114 000 g/mol et 185 000 g/mol.

**11.** Composition de caoutchouc selon une des revendications 8 à 10, **caractérisée en ce qu'**elle est à base d'une matrice élastomère comprenant à titre majoritaire ledit élastomère diénique monomodal couplé possédant une fonction silanol en milieu de chaîne.

**12.** Composition de caoutchouc selon une des revendications 8 à 11, ladite composition comprenant une charge renforçante comprenant ladite charge inorganique renforçante, **caractérisée en ce que** ladite charge inorganique renforçante est présente dans ladite charge renforçante selon une fraction massique supérieure à 50 % et allant jusqu'à 100 %.

**13.** Composition de caoutchouc selon la revendication 12, **caractérisée en ce que** la charge inorganique renforçante est de la silice.

**14.** Procédé de préparation d'une composition réticulable selon une quelconque des revendications 8 à 13, **caractérisé en ce qu'**il comprend :

(i) la préparation d'un élastomère diénique monomodal couplé possédant une fonction silanol en milieu de chaîne susceptible d'être obtenu par un procédé selon l'une quelconque des revendications 2 à 6 ;
(ii) la réalisation, à une température maximale comprise entre 130 °C et 200 °C, d'un premier temps de travail thermo-mécanique des constituants de ladite composition comprenant ledit élastomère possédant une fonction silanol en milieu de chaîne et une charge inorganique renforçante, à l'exception d'un système de réticulation, puis
(iii) la réalisation, à une température inférieure à ladite température maximale dudit premier temps, d'un second temps de travail mécanique au cours duquel est incorporé ledit système de réticulation.

**15.** Bande de roulement de pneumatique, **caractérisée en ce qu'**elle comprend une composition de caoutchouc réticulable ou réticulée selon l'une quelconque des revendications 8 à 13.

**16.** Pneumatique présentant une résistance au roulement réduite, **caractérisée en ce qu'**il comporte une bande de roulement selon la revendication 15.

**Patentansprüche**

**1.** Gekoppeltes Dienelastomer mit einer Silanolfunktion, **dadurch gekennzeichnet, dass** es in der Kettenmitte eine Silanolfunktion, einen Gesamtgehalt an SI-Funktion T, bei dem es sich um das Verhältnis $N_s/N_p$ handelt, wobei $N_s$ für die durch $^1$H-NMR-Kernspinresonanz bestimmte und in mmol/kg ausgedrückte Zahl der Mole Silicium, die an das gekoppelte Polymer gebunden sind, steht und $N_p$ für die Zahl der mMole Polymer vor der Kopplung pro Kilogramm Polymer steht, im Bereich von 0,36 bis 0,60, einen Gehalt an Silanolfunktion (SiOH) in der Kettenmitte I1, bei dem es sich um das durch $^1$H-$^{29}$Si-2-D-NMR-Kernspinresonanz bestimmte Verhältnis handelt, das der Zahl der Mole SiOH-Funktionen zur Zahl der Mole Silicium (Si) entspricht, im Bereich von 80 bis 100 % und eine monomodale Verteilung der zahlenmittleren Molmasse der gekoppelten Polymerketten aufweist.

**2.** Verfahren zum Erhalt eines gekoppelten monomodalen Dienelastomers mit einer Silanolfunktion in der Kettenmitte nach Anspruch 1, **dadurch gekennzeichnet, dass** das Verfahren darin besteht, dass man in einem ersten Schritt das Monomer bzw. die Monomere gegebenenfalls in Gegenwart oder Abwesenheit eines inerten Kohlenwasserstoff-Lösungsmittels mit einem Polymerisationsinitiator in Gegenwart eines polaren Chelatbildners, der an mindestens zwei Atomen mindestens ein nichtbindendes Elektronenpaar aufweist, umsetzt und in einem zweiten Schritt das lebende Dienpolymer mit einem Mittel zur Kopplung von Polymerketten in Gegenwart eines inerten Kohlenwasserstoff-Lösungsmittels umsetzt, was nach Hydrolyse das gekoppelte monomodale Dienpolymer mit einer Silanolfunktion in der Kettenmitte ergibt.

**3.** Verfahren nach Anspruch 2, **dadurch gekennzeichnet, dass** der polare Chelatbildner aus der Gruppe bestehend aus Mitteln mit mindestens einer tertiären Aminfunktion oder mindestens einer Etherfunktion ausgewählt wird.

**4.** Verfahren nach einem der Ansprüche 2 bis 3, **dadurch gekennzeichnet, dass** das Mittel zur Kopplung von Polymerketten der Formel $RSiX_3$ entspricht, wobei R für eine primäre oder sekundäre Alkyl-, Cycloalkyl- oder Arylgruppe

mit 1 bis 20 Kohlenstoffatomen steht und X für ein Halogenatom und vorzugsweise Chlor oder Brom steht.

**5.** Verfahren nach einem der Ansprüche 2 bis 4, **dadurch gekennzeichnet, dass** das Mengenverhältnis von Kopplungsmittel zu Metall des Initiators der lebenden Polymerketten zwischen 0,4 und 1,0 liegt.

**6.** Verfahren nach einem der Ansprüche 2 bis 5, **dadurch gekennzeichnet, dass** das Polymerisationslösungsmittel mit dem Lösungsmittel für die Kopplung der Polymerketten identisch ist.

**7.** Gekoppeltes monomodales Dienelastomer mit einer Silanolfunktion in der Kettenmitte, das durch ein Verfahren nach einem der Ansprüche 2 bis 6 erhältlich ist.

**8.** Vernetzbare oder vernetzte Kautschukzusammensetzung, die zur Bildung einer Reifenlauffläche verwendet werden kann, auf Basis von mindestens einem verstärkenden anorganischen Füllstoff und mindestens einem gekoppelten monomodalen Dienelastomer mit mindestens einer Silanolfunktion in der Kettenmitte nach Anspruch 1.

**9.** Zusammensetzung nach Anspruch 8, **dadurch gekennzeichnet, dass** sich das monomodale gekoppelte Dienelastomer mit einer Silanolfunktion in der Kettenmitte von einem in Lösung hergestellten Butadien/Vinylaromat-Copolymer ableitet.

**10.** Kautschukzusammensetzung nach Anspruch 8 oder 9, **dadurch gekennzeichnet, dass** das monomodale gekoppelte Dienelastomer mit einer Silanolfunktion in der Kettenmitte eine zahlenmittlere Molmasse Mn aufweist, die zwischen 100.000 g/mol und 350.000 g/mol und vorzugsweise zwischen 114.000 g/mol und 185.000 g/mol liegt.

**11.** Kautschukzusammensetzung nach einem der Ansprüche 8 bis 10, **dadurch gekennzeichnet, dass** sie auf einer Elastomermatrix basiert, die hauptsächlich das gekoppelte monomodale Dienelastomer mit einer Silanolfunktion in der Kettenmitte umfasst.

**12.** Kautschukzusammensetzung nach einem der Ansprüche 8 bis 11, wobei die Zusammensetzung einen verstärkenden Füllstoff umfasst, der den verstärkenden anorganischen Füllstoff umfasst, **dadurch gekennzeichnet, dass** der verstärkende anorganische Füllstoff in dem verstärkenden Füllstoff gemäß einem Massenanteil von mehr als 50 % und bis zu 100 % vorliegt.

**13.** Kautschukzusammensetzung nach Anspruch 12, **dadurch gekennzeichnet, dass** es sich bei dem anorganischen Füllstoff um Kieselsäure handelt.

**14.** Verfahren zur Herstellung einer vernetzbaren Zusammensetzung nach einem der Ansprüche 8 bis 13, **dadurch gekennzeichnet, dass** es Folgendes umfasst:

(i) die Herstellung eines gekoppelten monomodalen Dienelastomers mit einer Silanolfunktion in der Kettenmitte, das durch ein Verfahren nach einem der Ansprüche 2 bis 6 erhältlich ist;
(ii) die Durchführung eines ersten Schritts der thermomechanischen Bearbeitung der Bestandteile der Zusammensetzung, die das Elastomer mit einer Silanolfunktion in der Kettenmitte und einen verstärkenden anorganischen Füllstoff umfasst, mit Ausnahme des Vernetzungssystems bei einer Höchsttemperatur zwischen 130 °C und 200 °C, dann
(iii) die Durchführung eines zweiten Schritts der mechanischen Bearbeitung, in deren Verlauf das Vernetzungssystem eingearbeitet wird, bei einer Temperatur, die unter der Höchsttemperatur des ersten Schritts liegt.

**15.** Reifenlauffläche, **dadurch gekennzeichnet, dass** sie eine vernetzbare oder vernetzte Kautschukzusammensetzung nach einem der Ansprüche 8 bis 13 umfasst.

**16.** Reifen mit verlängertem Rollwiderstand, **dadurch gekennzeichnet, dass** er eine Lauffläche nach Anspruch 15 umfasst.

## Claims

**1.** Coupled diene elastomer having a silanol functional group, **characterized in that** it comprises a silanol functional group in the middle of the chain, an overall level of Si functional group L (which is the ratio Ns/Np, in which Ns

represents the number of moles of silicon bonded to the coupled polymer, determined by 1H nuclear magnetic resonance NMR and expressed in mmol/kg, and Np represents the number of mmoles of polymer before coupling per kilogram of polymer) ranging from 0.36 to 0.60, a level of silanol functional group (SiOH) in the middle of the chain L1, which is the ratio corresponding to the number of moles of SiOH functional groups to the number of moles of silicon (Si), determined by 2D 1H-29Si nuclear magnetic resonance NMR, ranging from 80 to 100% and a monomodal distribution of the number-average molecular weights of the coupled polymer chains.

**2.** Process for obtaining a monomodal coupled diene elastomer having a silanol functional group in the middle of the chain according to Claim 1, **characterized in that** the said process consists, in a first stage, in reacting the monomer(s) optionally in the presence or absence of an inert hydrocarbon solvent, with a polymerization initiator in the presence of a chelating polar agent having at least one nonbonding doublet on at least two atoms and, in a second stage, in reacting the living diene polymer with a coupling agent for polymer chains in the presence of an inert hydrocarbon solvent in order to obtain, after hydrolysis, the monomodal coupled diene polymer having a silanol functional group in the middle of the chain.

**3.** Process according to Claim 2, **characterized in that** the chelating polar agent is chosen from the group consisting of agents comprising at least one tertiary amine functional group or at least one ether functional group.

**4.** Process according to either of Claims 2 and 3, **characterized in that** the coupling agent for polymer chains corresponds to the formula $RSiX_3$ in which R represents a primary or secondary alkyl, cycloalkyl or aryl group having from 1 to 20 carbon atoms and X represents a halogen atom, preferably chlorine or bromine.

**5.** Process according to one of Claims 2 to 4, **characterized in that** the coupling agent/metal of the initiator of the living polymer chains quantitative ratio is between 0.4 and 1.0.

**6.** Process according to one of Claims 2 to 5, **characterized in that** the polymerization solvent is the same as the coupling solvent for the polymer chains.

**7.** Monomodal coupled diene elastomer having a silanol functional group in the middle of the chain capable of being obtained by a process according to any one of Claims 2 to 6.

**8.** Crosslinkable or crosslinked rubber composition which can be used to form a tyre tread, based on at least one reinforcing inorganic filler and at least one monomodal coupled diene elastomer having a silanol functional group in the middle of the chain according to Claim 1.

**9.** Composition according to Claim 8, **characterized in that** the said monomodal coupled diene elastomer having a silanol functional group in the middle of the chain results from a butadiene/ vinylaromatic copolymer prepared in solution.

**10.** Rubber composition according to Claim 8 or 9, **characterized in that** the said monomodal coupled diene elastomer having a silanol functional group in the middle of the chain exhibits a number-average molecular weight Mn which is between 100 000 g/mol and 350 000 g/mol and preferably between 114 000 g/mol and 185 000 g/mol.

**11.** Rubber composition according to one of Claims 8 to 10, **characterized in that** it is based on an elastomer matrix predominantly comprising the said monomodal coupled diene elastomer having a silanol functional group in the middle of the chain.

**12.** Rubber composition according to one of Claims 8 to 11, the said composition comprising a reinforcing filler comprising the said reinforcing inorganic filler, **characterized in that** the said reinforcing inorganic filler is present in the said reinforcing filler according to a fraction by weight of greater than 50% and ranging up to 100%.

**13.** Rubber composition according to Claim 12, **characterized in that** the reinforcing inorganic filler is silica.

**14.** Process for preparing a crosslinkable composition according to any one of Claims 8 to 13, **characterized in that** it comprises:

(i) the preparation of a monomodal coupled diene elastomer having a silanol functional group in the middle of the chain capable of being obtained by a process according to any one of Claims 2 to 6;

(ii) carrying out, at a maximum temperature of between 130°C and 200°C, a first step of thermomechanical working of the constituents of the said composition comprising the said elastomer having a silanol functional group in the middle of the chain and a reinforcing inorganic filler, with the exception of a crosslinking system, then
(iii) carrying out, at a temperature lower than the said maximum temperature of the said first step, a second step of mechanical working during which the said crosslinking system is incorporated.

**15.** Tyre tread, **characterized in that** it comprises a crosslinkable or crosslinked rubber composition according to any one of Claims 8 to 13.

**16.** Tyre exhibiting a reduced rolling resistance, **characterized in that** it comprises a tread according to Claim 15.

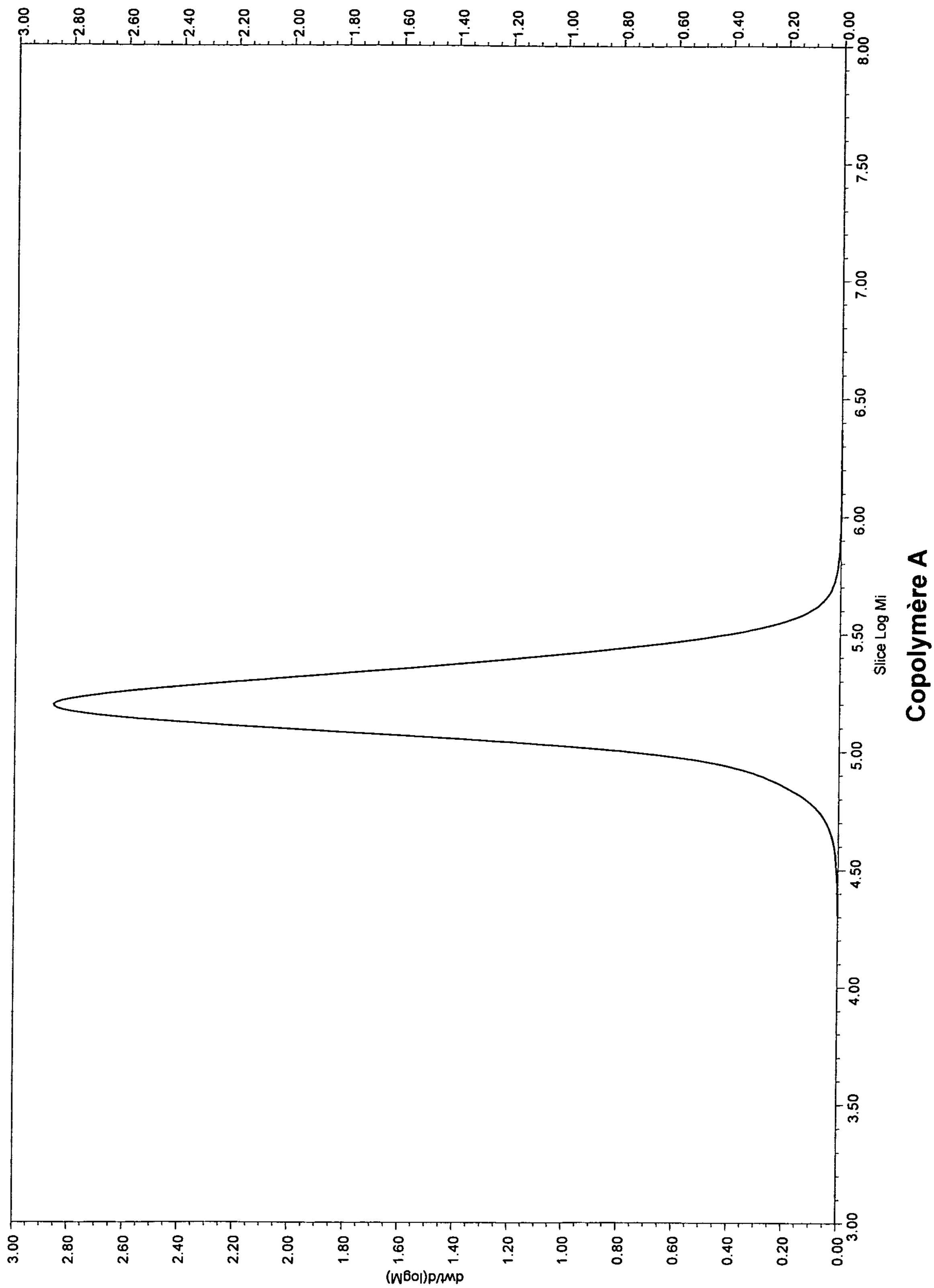
dw/d(logM)
Slice Log Mi
Copolymère A
3.00
2.80
2.60
2.40
2.20
2.00
1.80
1.60
1.40
1.20
1.00
0.80
0.60
0.40
0.20
0.00
3.00
3.50
4.00
4.50
5.00
5.50
6.00
6.50
7.00
7.50
8.00

**Fig. 1**

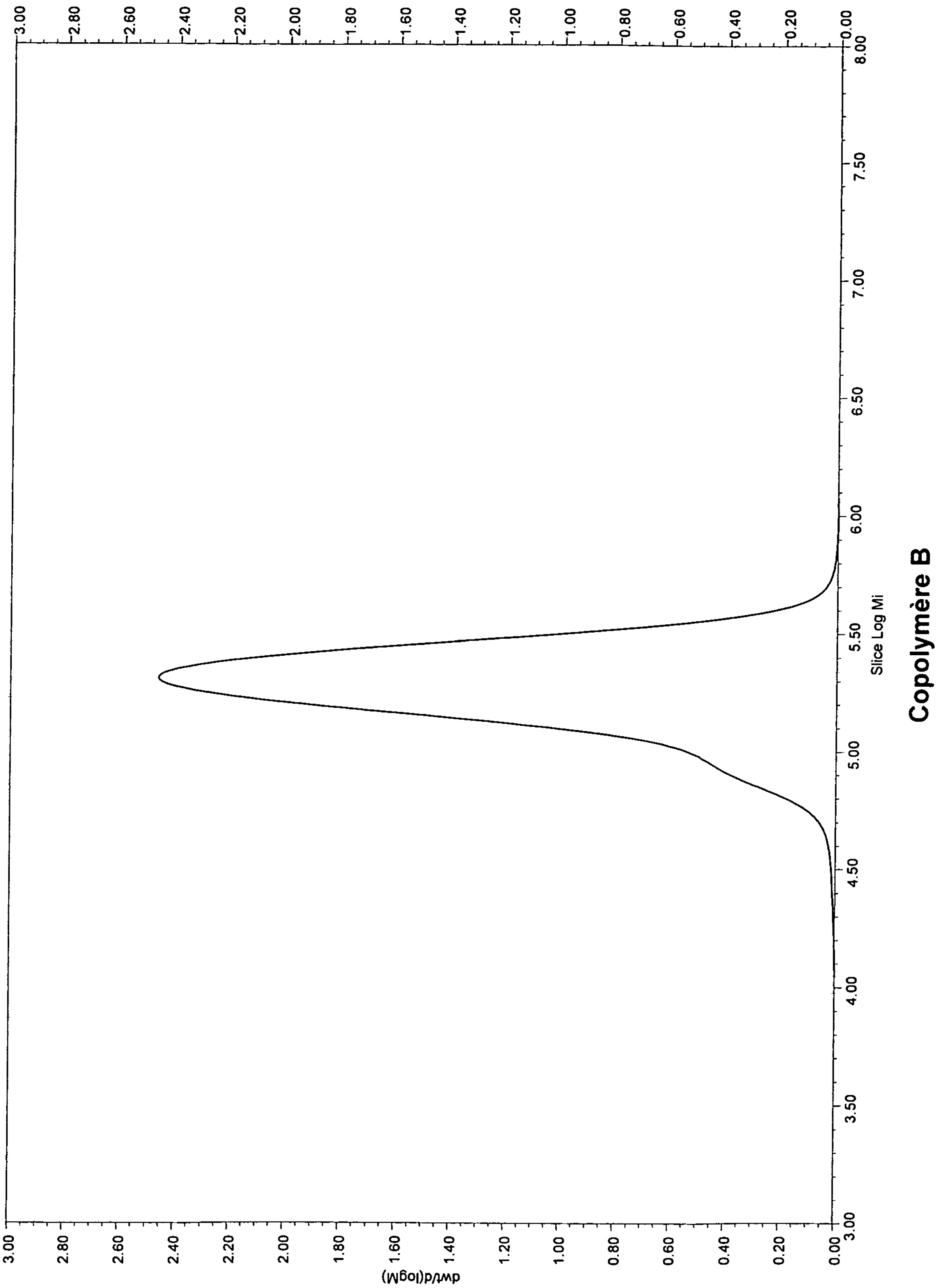
dw/d(logM)
0.00
0.20
0.40
0.60
0.80
1.00
1.20
1.40
1.60
1.80
2.00
2.20
2.40
2.60
2.80
3.00
Slice Log Mi
3.00
3.50
4.00
4.50
5.00
5.50
6.00
6.50
7.00
7.50
8.00
Copolymère B

Fig. 2

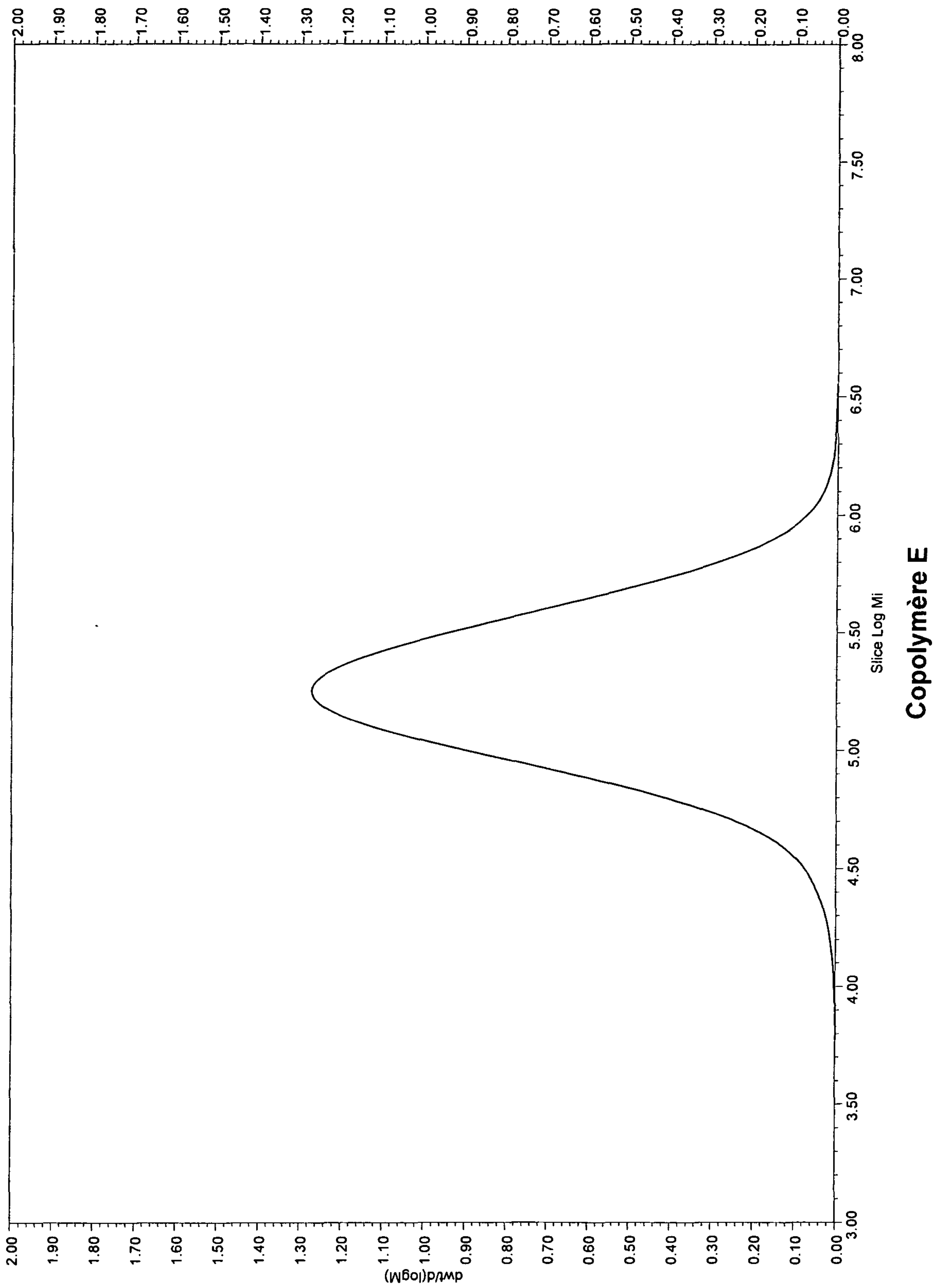


**Fig. 3**

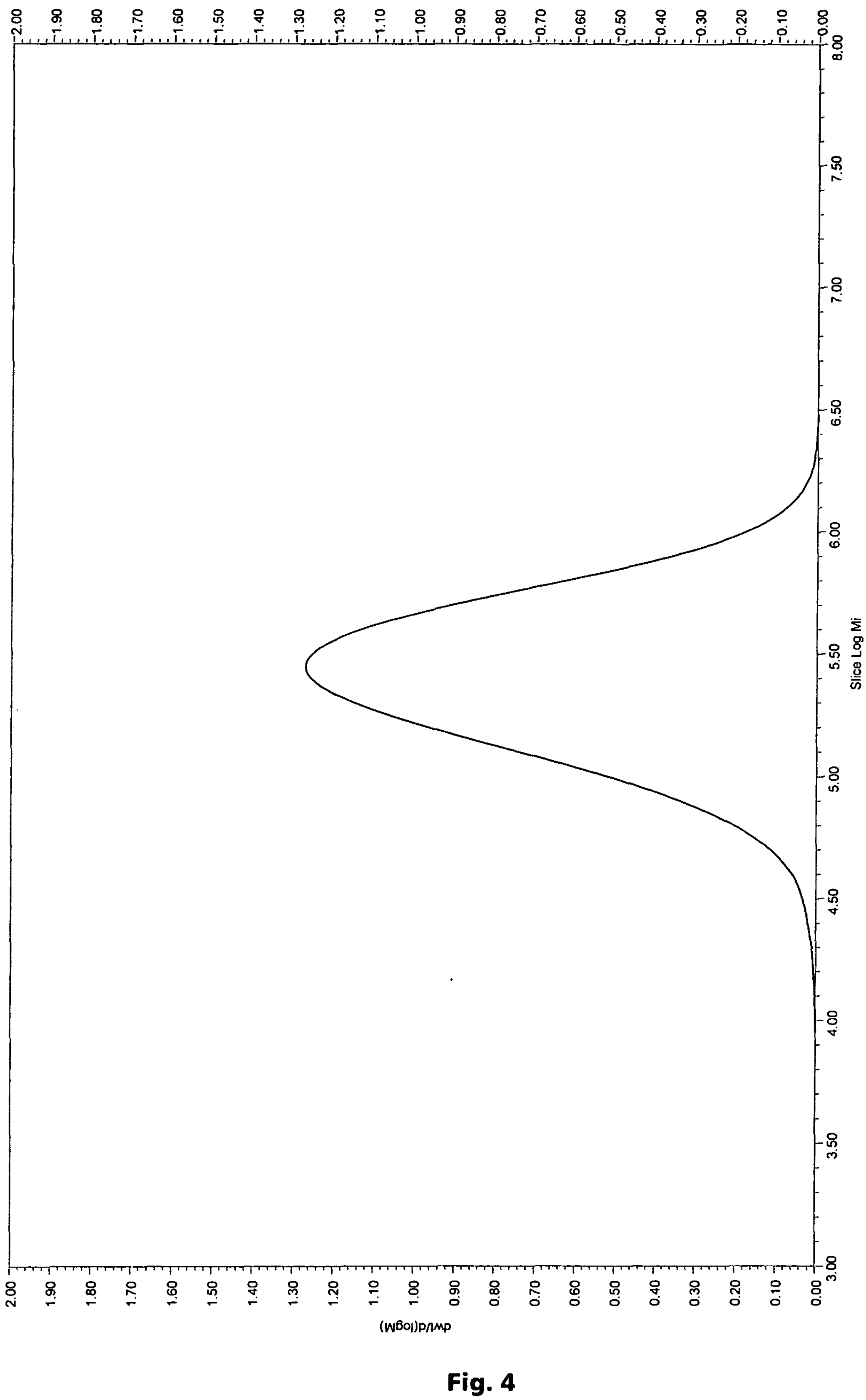


**Copolymère F**

**Fig. 4**

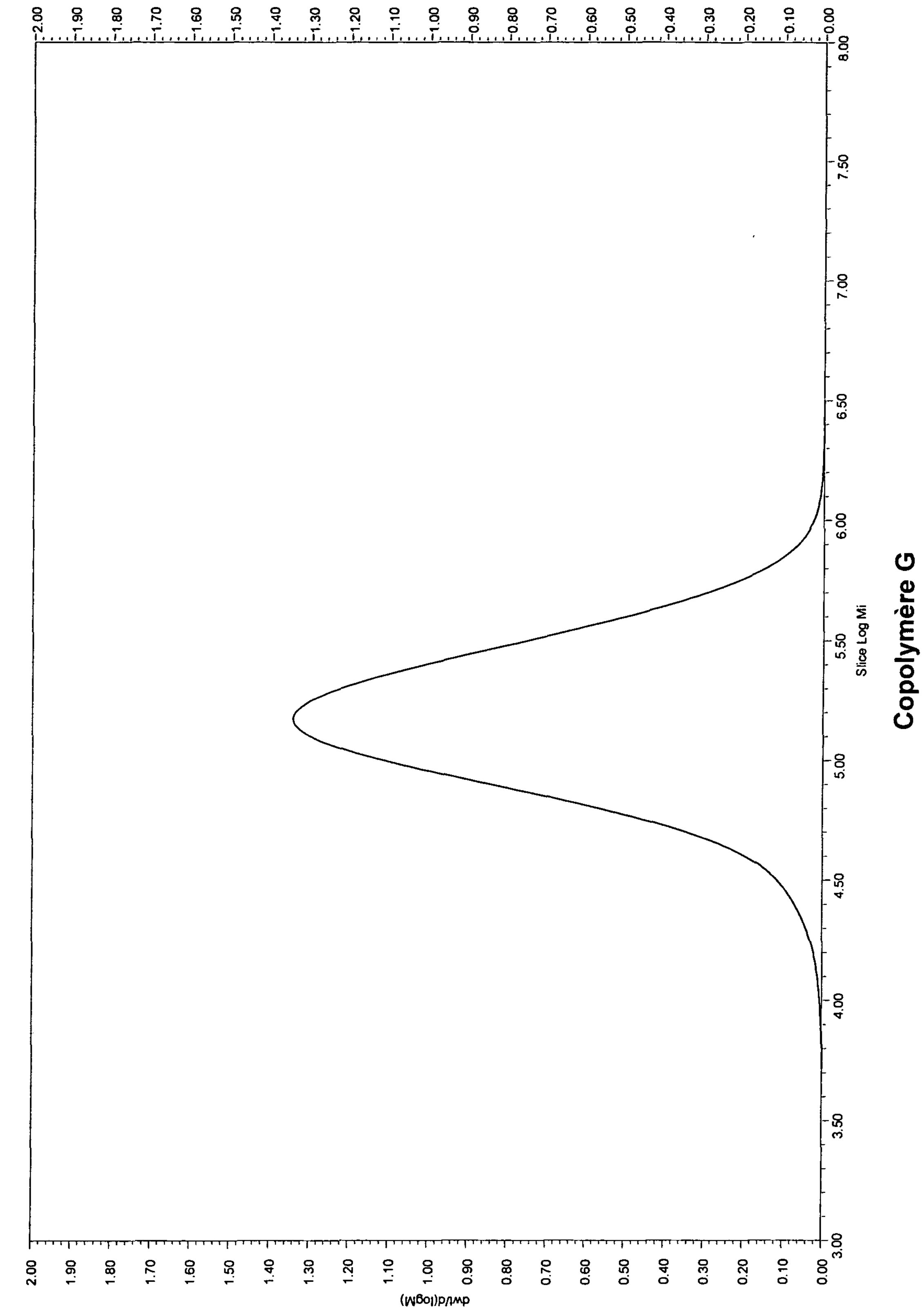
dw/d(logM)
Slice Log Mi
Copolymère G
2.00
1.90
1.80
1.70
1.60
1.50
1.40
1.30
1.20
1.10
1.00
0.90
0.80
0.70
0.60
0.50
0.40
0.30
0.20
0.10
0.00
3.00
3.50
4.00
4.50
5.00
5.50
6.00
6.50
7.00
7.50
8.00

Fig. 5

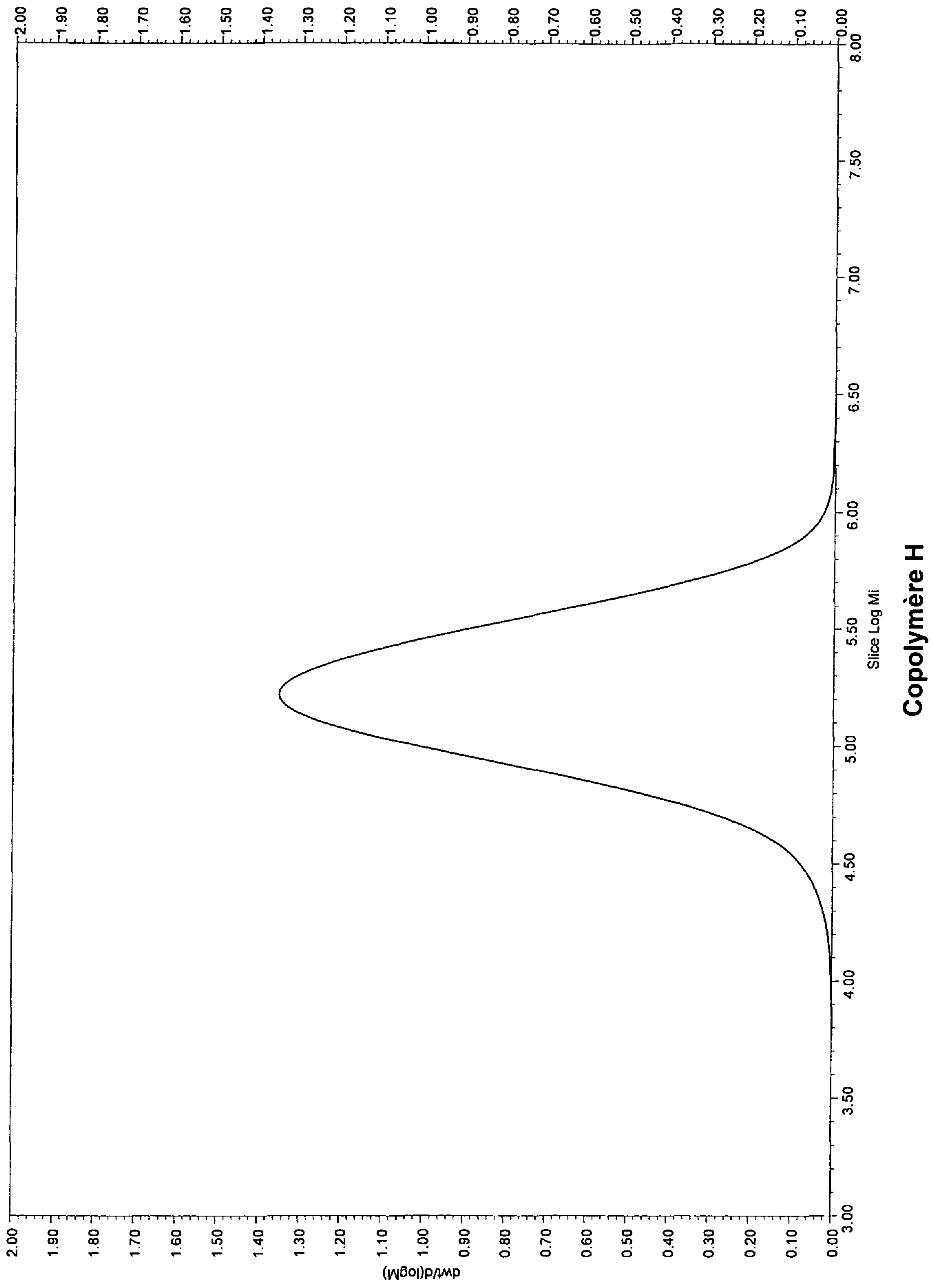
Copolymère H
Slice Log Mi
dw/d(logM)
3.00
3.50
4.00
4.50
5.00
5.50
6.00
6.50
7.00
7.50
8.00
0.00
0.10
0.20
0.30
0.40
0.50
0.60
0.70
0.80
0.90
1.00
1.10
1.20
1.30
1.40
1.50
1.60
1.70
1.80
1.90
2.00

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4677165 B
- US 4647625 B
- EP 0590491 A
- EP 0593049 A
- EP 0299074 A
- EP 0447066 A
- EP 0877047 A
- EP 0778311 A1
- EP 1398347 A1
- EP 1400559 A1
- EP 1400560 A1
- WO 03016387 A
- EP 735088 A
- WO 9637547 A
- EP 810258 A
- WO 9928376 A
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- EP 1043357 A
- WO 03002648 A
- US 20050016651 A
- WO 03002649 A
- US 20050016650 A
- WO 02083782 A
- US 20040132880 A
- WO 0230939 A
- WO 0241041 A
- WO 0210269 A
- EP 692493 A


### Littérature non-brevet citée dans la description


- Chemistry and Technology of Silicones. Academic Press, 1968, 95
- *Journal of Polymer Science : Part A,* 1965, vol. 3, 93-103
- *The Journal of the American Chemical Society,* Février 1938, vol. 60, 309
- **BEEBE, D. H.** *Polymer,* 1978, vol. 19, 231-33
- **BRADBURY, J. H. ; ELIX, J. A. ; PERERA, M. C. S.** *Journal of Polymer Science,* 1988, vol. 26, 615-26
- **DURBETAKI, A. J. ; MILES, C. M.** *analytical chemistry,* 1965, vol. 37, 1231-35
- **GRONSKI, W. ; MURAYAMA, N. ; CANTOW, H.-J.** *Polymer,* Avril 1976, 358-60
- **KOBAYASHI, E. ; FURAKAWA, J. ; OCHIAI, M. ; TSUJIMOTO, T.** *European Polymer J.,* 1983, vol. 10, 871-75